# EUROPÄISCHE PATENTSCHRIFT

(11) **EP 3 031 659 B1**
(45) Veröffentlichungstag und Bekanntmachung des Hinweises auf die Patenterteilung: **24.10.2018**
(21) Anmeldenummer: 14197824.7
(22) Anmeldetag: 12.12.2014
(51) Int. Cl.: B60L 11/18

(54) **Modulares Fahrzeugsystem mit erhöhter Betriebssicherheit**
Modular vehicle system having increased operational safety
Système modulaire de véhicule ayant une sécurité de fonctionnement élevée

(43) Veröffentlichungstag der Anmeldung: 15.06.2016
(73) Patentinhaber: Energybus E.V., 07922 Tanna (DE)
(72) Erfinder: Dörndorfer, Johannes, 73525 Schwäbisch Gmünd (DE)
(74) Vertreter: sgb europe

(56) Entgegenhaltungen:
- EP-A1- 2 455 924
- EP-A1- 2 716 490
- WO-A1-2012/107448
- WO-A1-2013/118385
- DE-A1-102008 048 657
- DE-A1-102011 007 763
- DE-A1-102011 009 559
- DE-A1-102011 075 529
- US-A1- 2012 109 403
- US-A1- 2014 191 718
- Anonymous: "Near field communication - Wikipedia, the free encyclopedia", , 31. Juli 2013 (2013-07-31), XP055098492, Gefunden im Internet: URL:http://en.wikipedia.org/w/index.php?ti tle=Near_field_communication&oldid=5666043 10 [gefunden am 2014-01-27]

## Beschreibung

Die Erfindung betrifft ein modulares Fahrzeugsystem, ein Elektrofahrzeug und ein Modul zur Verbindung mit einem Elektrofahrzeug.

Elektrisch angetriebene Fahrzeuge gewinnen seit geraumer Zeit insbesondere für den Personennahverkehr angesichts steigender Energiekosten und der Forderung nach verringerten Emissionen des Verkehrs zunehmend an Bedeutung. Insbesondere im Bereich der Elektroleichtfahrzeuge, in welchen bspw. Elektrofahrräder, Pedelecs und Roller, aber auch Rollstühle und Quads fallen, sind mittlerweile zahlreiche Fahrzeugtypen kommerziell erhältlich.

Sämtliche derartige Fahrzeuge weisen einen Elektromotor auf, der zum alleinigen oder unterstützenden Antrieb eingesetzt und über eine oder mehrere Batterien mit elektrischer Energie versorgt wird. Es ist daher notwendig, das elektrische System von Elektrofahrzeugen so auszulegen, dass eine sichere und störungsfreie Leistungsversorgung des Elektromotors gegeben ist.

Bei solchen Fahrzeugen muss die gesamte bzw. ein großer Teil der Antriebsleistung über das elektrische System des Fahrzeugs bereitgestellt werden. Stromstärke und/oder Betriebsspannung liegen daher regelmäßig höher als bei bekannten Kraftfahrzeugen. Bei Eingriffen in das elektrische System besteht daher ein relativ hohes Risiko von Beschädigungen, insbesondere auch des Antriebssystems des Fahrzeugs, bspw. wenn eine nicht kompatible Batterie eingebaut oder ein ungeeignetes Ladegerät mit dem Fahrzeug verbunden wird. Anders als bei üblichen Kraftfahrzeugen lässt sich ein Eingriff in das elektrische System durch ungeschultes Personal bei Elektrofahrzeugen nicht vollständig vermeiden. Bedingt durch die begrenzte Batteriekapazität und dadurch eingeschränkte Reichweite ist bspw. erforderlich, dass ein Benutzer ein Ladegerät an das Fahrzeug anschließen oder eine Batterie leicht austauschen kann. Ein Elektrofahrzeug, welches einen leichten und sicheren Austausch von elektrischen Modulen, insbesondere auch durch einen Fahrzeugbenutzer, ermöglicht, ist aus der WO2011/135036 A2 bekannt.

Ein unbeabsichtigtes Trennen oder Verbinden von einzelnen Komponenten, wie bspw. eines Ladegerätes oder einer Batterie, können Störungen oder im ungünstigsten Fall auch Beschädigungen am elektrischen System des Elektrofahrzeugs verursachen. Gerade im öffentlichen Bereich, wie bspw. an öffentlichen stationären Ladesäulen oder, im Falle von Vermietangeboten, an für die Öffentlichkeit frei zugänglichen Selbstbedienungsstationen, erfolgt keine Kontrolle, ob ein ordnungsgemäßer Anschluss zwischen der Ladesäule bzw. Station und dem Fahrzeug erfolgt. Außerdem gewährleisten die bekannten Anschlusssysteme keinen sicheren Schutz vor Eingriffen Dritter in die Verbindung zwischen Ladestation und Batterie. Ein modulares Fahrzeugsystem mit erhöhter Betriebssicherheit, bei dem die Verbindung mit einem Modul besonders leicht, sicher und geschützt vor dem Eingriff unberechtigter Personen mittels einer Verriegelung erfolgen kann, ist beispielsweise aus der WO2012/107448 A1 bekannt.

In beiden vorgenannten Druckschriften erfolgt eine Kommunikation zwischen dem Elektrofahrzeug und dem Modul, unter anderem um die Kompatibilität dieser sicherzustellen. Im Falle eines Lademoduls können während der Kompatibilitätsprüfung insbesondere elektrische Betriebsparameter der Komponenten überprüft werden, um sicherzustellen, dass eine seitens des Elektrofahrzeugs angeordnete Batterie sicher mittels des Lademoduls aufgeladen werden kann. Zu diesem Zweck ist in einem Ausführungsbeispiel eine Steuerungseinrichtung des Elektrofahrzeugs mit einer Modulsteuerung des Moduls über ein trennbares Bussystem verbunden.

Problematisch an dieser Verbindung kann die Kontaktsicherheit sein, insbesondere falls die eingangs genannten Komponenten der Witterung ausgesetzt sind. Ist eine Kommunikation nicht zuverlässig möglich, kann jedoch die Funktionalität stark eingeschränkt sein. In dem eingangs erwähnten Beispiel eines Lademoduls ist ein Aufladen der Batterie des Elektrofahrzeugs dann nicht möglich.

DE 10 2008 048657 A1 befasst sich mit dem Verkauf von elektrischer Energie von einem Energieversorger an einen Verbraucher sowie von einem Verbraucher an einen Energieversorger und dem Vermarkten von Speicherkapazität. DE 10 2008 048657 A1 offenbart einen Adapter, der die Teilnahme an einem Ladenetz für elektrische Verbraucher ermöglicht. DE 10 2008 048657 A1 offenbart ferner ein Verfahren zum Erfassen und Abrechnen von Transaktionen zwischen einem Ladenetzanbieter und dem Nutzer eines Verbrauchers.

Druckschrift US 2012 / 109403 A1 offenbart ein Verfahren und eine Vorrichtung zum Managen von Energiedienstleistungen. Eine Ladestation ist mit einem Stromnetz verbunden und besitzt einen Netzstecker, der mit einem RFID-Tag versehen ist. Ein mobiler elektrischer Verbraucher besitzt einen Energiespeicher und einen Ladestecker, der mit einem RFID-Reader versehen ist.

Druckschrift US 2014/191718 A1 offenbart eine sichere Identifikation zum Laden von Elektrofahrzeugen. Ein Ladestecker eines Lademoduls besitzt ein RFID-Tag Reader. Am Fahrzeug ist ein RFID-Tag angebracht. Das Fahrzeug wird über RFID automatisch identifiziert, bspw. zur Authentifizierung im Rahmen einer Befüllung.

Druckschrift EP2716490 A1 offenbart ein steckbares Ladesystem, das zwei Spannungen, eine Gleich- und eine Wechselspannung bereitstellt. Es besteht die Aufgabe, ein modulares Fahrzeugsystem zu schaffen, bei dem die genannten Nachteile des Standes der Technik vermieden werden, wobei insbesondere eine zuverlässigere Kommunikation zwischen Fahrzeug und Modul bereitgestellt wird.

Die Aufgabe wird gelöst durch ein modulares Fahrzeugsystem nach Anspruch 1 mit einem Elektrofahrzeug und einem mit dem Elektrofahrzeug mittels einer Steckverbindung verbindbaren Modul, ein Elektrofahrzeug nach Anspruch 13, ein Modul nach Anspruch 14 und ein Verfahren nach Anspruch 15. Bevorzugte Ausführungsformen der Erfindung sind in den Unteransprüchen beschrieben.

Ein Kernaspekt der Erfindung ist der Einsatz von Nahfeld- bzw. Nahbereichskommunikation, im Nachfolgenden auch als "NFC" (Near Field Communication) bezeichnet, in der Steckverbindung zwischen Elektrofahrzeug und Modul, mindestens um eine Steuerungseinrichtung des Elektrofahrzeugs mit einer Modulsteuerung des Moduls zum Datenaustausch zu verbinden. Neben einer zuverlässigen Kommunikation, selbst bei der Witterung ausgesetzten Komponenten, stellt die erfindungsgemäße Ausgestaltung ferner eine galvanische Trennung zwischen Steuerungseinrichtung und Modulsteuerung bereit, was bei Fehlfunktionen einer Komponente eine Beschädigung der jeweilig anderen Komponente vermeidet. Der Einsatz von NFC in der Steckverbindung, also einer drahtlosen Kommunikation, bei der kein signifikantes Fernfeld entsteht, reduziert ferner etwaige Datensicherheitsbedenken durch die begrenzte Reichweite der Kommunikation.

Im Rahmen der Erfindung wird unter einem Elektrofahrzeug ein ein- oder mehrspuriges elektrisch angetriebenes Fahrzeug und insbesondere ein Straßenfahrzeug verstanden. Bevorzugt ist das Elektrofahrzeug ein Elektroleichtfahrzeug, wie bspw. ein elektrisches Zwei- oder Dreirad bzw. ein Elektrofahrrad, Pedelec, Roller, Rollstuhl, Quad oder Kart. Insbesondere bevorzugt ist ein Elektroleichtfahrzeug mit einem Leergewicht von nicht mehr als 500 kg, weiter bevorzugt nicht mehr als 350 kg, jeweils ohne Zubehör, wie bspw. Batterien.

Erfindungsgemäß weist das Elektrofahrzeug zumindest ein Leistungsbordnetz zur Energieversorgung einer elektrischen Antriebseinheit des Elektrofahrzeugs, eine Steuerungseinrichtung zur Kommunikation mit einem Modul, und mindestens eine mit dem Leistungsbordnetz und der Steuerungseinrichtung verbundene Schnittstelle zur Verbindung mit dem Modul auf, welche Schnittstelle ein erstes Element einer Steckverbindung bildet.

Das Modul weist zumindest eine elektrische Anordnung, eine Modulsteuerung zur Kommunikation mit der Steuerungseinrichtung des Elektrofahrzeugs, und ein mit der elektrischen Anordnung und der Modulsteuerung verbundenes Anschlusselement auf, das ein zweites Element der Steckverbindung bildet. Die Schnittstelle des Elektrofahrzeugs ist trennbar mit dem Anschlusselement des Moduls verbindbar, insbesondere mechanisch verbindbar, um die elektrische Anordnung des Moduls mit dem Leistungsbordnetz des Elektrofahrzeugs zu verbinden. Fahrzeug und Modul können naturgemäß weitere Komponenten aufweisen, insbesondere ein oder mehrere Schalteinheiten, welche die Verbindung zwischen Leistungsbordnetz und Modul schalten, auf die jedoch zunächst nicht näher eingegangen wird.

Die Schnittstelle des Elektrofahrzeugs weist erfindungsgemäß eine erste NFC-Einrichtung und das Anschlusselement des Moduls eine zweite NFC-Einrichtung auf, **welche mindestens zur bidirektionalen** Nahbereichskommunikation miteinander ausgebildet sind, um die Steuerungseinrichtung des Elektrofahrzeugs mit der Modulsteuerung zu verbinden.

Das Leistungsbordnetz des erfindungsgemäßen Elektrofahrzeugs ist zur Energieversorgung der elektrischen Antriebseinheit ausgelegt und verbindet mindestens die Antriebseinheit mit der mindestens einen Schnittstelle. Das Leistungsbordnetz kann naturgemäß grundsätzlich weitere entsprechend ausgebildete Schnittstellen, elektrische Komponenten oder Baugruppen des Fahrzeugs verbinden, wie bspw. eine oder mehrere interne Batterien, Generatoren, Brennstoffzellen, DC/DC-Wandler, Motoren oder anderweitige Komponenten.

Aufgrund der Anforderung hinsichtlich einer Energieversorgung der elektrischen Antriebseinheit ist das Leistungsbordnetz bevorzugt für einen elektrischen Strom von mindestens 3A, insbesondere mindestens 5A, zweckmäßig 60A ausgelegt. Die Spannung kann hierbei geeignet gewählt sein und eine Wechselspannung oder eine Gleichspannung sein. Zweckmäßig ist eine Spannung von 10V - 150V, insbesondere 24V - 120V, und besonders zwischen 60-120V. Gemäß eines Beispiels ist das Leistungsbordnetz ein Gleichstromleistungsnetz, insbesondere ein 60V DC Leistungsnetz.

Je nach Ausgestaltung und Typ des Fahrzeugs kann neben dem Leistungsbordnetz gemäß eines bevorzugten Ausführungsbeispiels ein separates Hilfsbordnetz vorgesehen sein, welches weitere elektrische Baugruppen, wie Steuerungen, Armaturen, Bedienelemente und/oder Beleuchtungseinrichtungen mit elektrischer Energie versorgt. Insbesondere bevorzugt ist das Hilfsbordnetz für eine Spannung von 12V bzw. 14V ausgelegt. Das Hilfsbordnetz kann eine eigene Spannungsversorgung, bspw. eine Batterie, aufweisen, oder bspw. mittels eines Konverters aus dem Leistungsbordnetz versorgt sein. Ergänzend oder alternativ kann das Leistungsbordnetz für mehrere Spannungsebenen, bspw. 60V sowie 120V Spitzenspannung bzw. 48V und 96V Nominalspannung, ausgebildet sein, um bspw. eine Schnelladung einer Batterie zu ermöglichen.

Im Rahmen der vorliegenden Erfindung wird unter einer Batterie naturgemäß eine wiederaufladbare Batterie verstanden, wie bspw. ein oder mehrere Akkumulatoren.

Die erfindungsgemäße elektrische Antriebseinheit dient der Umwandlung von elektrischer Energie in mechanische Arbeit und kann bspw. einen oder mehrere Elektromotoren aufweisen. Hierbei ist die elektrische Antriebseinheit bevorzugt als Hauptantrieb eingesetzt; alternativ oder ergänzend ist es jedoch ebenfalls denkbar, dass die elektrische Antriebseinheit zum unterstützenden Antrieb, bspw. bei Elektrofahrrädern unterstützend zu einem Tretantrieb, eingesetzt ist.

Die elektrische Antriebseinheit kann als Direktantrieb ausgebildet sein, d.h. als Antrieb ohne Getriebe, was hinsichtlich der Energieeffizienz vorteilhaft ist. Bei einem Elektroleichtfahrzeug ist die elektrische Antriebseinheit bevorzugt ein Scheibenläufermotor. Insbesondere bevorzugt ist die Antriebseinheit ein Getriebemotor. Je nach Ausgestaltung der Antriebseinheit ist eine Motorsteuerung vorgesehen, die zur Regelung der Antriebsleistung ausgebildet ist, bspw. mittels Strom- und/oder Spannungsregelung und/oder Pulsweitenmodulation (PWM).

Die mindestens eine Schnittstelle des Fahrzeugs ist zur Verbindung mit dem Anschlusselement des Moduls ausgebildet. Schnittstelle und Anschlusselement können hierbei sämtliche geeignete Ausgestaltungen aufweisen, die eine sichere elektrische Verbindung zwischen Modul und Leistungsbordnetz bereitstellen. Naturgemäß sollten Schnittstelle und Anschlusselement entsprechend mechanisch aufeinander angepasst ausgebildet sein. Die Schnittstelle und das Anschlusselement sind nach der Erfindung als Steckverbindung ausgebildet. Dadurch wird eine hervorragende Bedienbarkeit erzielt und ein leichtes Verbinden von Modulen mit dem Fahrzeug ermöglicht. Bevorzugt sind das Anschlusselement und die Schnittstelle als zueinander passende Steckelemente ausgebildet. Vorzugsweise ist die Schnittstelle als Stecker und das Anschlusselement als Buchse ausgebildet.

Gemäß der Erfindung ist die fahrzeugseitige Schnittstelle mindestens mit dem Leistungsbordnetz und der Steuerungseinrichtung verbunden, während das modulseitige Anschlusselement mindestens mit der elektrischen Anordnung und der Modulsteuerung verbunden ist. Diese internen Verbindungen sind leiterbasiert ausgeführt und können permanent, trennbar oder schaltbar ausgeführt sein. Es sollte ohne weiteres folgen, dass die Verbindungen auf die jeweilige Spannung und den jeweiligen Strom angepasst ausgebildet sein sollten.

Angesichts der möglichen Bedienung durch Fahrzeugbenutzer sollten bevorzugt sämtliche stromführenden Teile geeignet berührungsgeschützt ausgeführt sein, entsprechend auch Schnittstelle und Anschlusselement.

Das erfindungsgemäße elektrische Modul weist neben dem Anschlusselement ferner eine elektrische Anordnung auf, wie bereits erwähnt. Die elektrische Anordnung ist zur Verbindung mit dem Leistungsbordnetz ausgelegt und kann sämtliche geeignete Ausgestaltungen aufweisen. Es kann sich hierbei im einfachsten Fall bspw. um eine elektrische Leiteranordnung handeln, die zur Verbindung mit dem Leistungsbordnetz über das Anschlusselement ausgebildet ist und bspw. das Leistungsbordnetz, gegebenenfalls mittels eines weiteren Steckverbinders, mit weiteren Bauteilen oder mit einem weiteren Modul verbindet. Insbesondere umfasst die elektrische Anordnung jedoch ein oder mehrere elektrische bzw. elektronische Bauteile und/oder Schaltungen.

Zweckmäßig ist die elektrische Anordnung eine Leistungsanordnung. Der Begriff der Leistungsanordnung umfasst im Rahmen der vorliegenden Erfindung sämtliche elektrische Schaltungsanordnungen und Bauteile, die zur Verbindung mit dem Leistungsbordnetz bzw. der Antriebseinheit und insbesondere zur Zufuhr von elektrischer Energie für die Antriebseinheit bzw. zum Abführen von seitens der Antriebseinheit erzeugter elektrischer Energie ausgebildet sind. Letzteres kann insbesondere dann der Fall sein, wenn die Antriebseinheit als Rekuperationsbremse oder als Generator eingesetzt ist. Bevorzugt ist die Leistungsanordnung für die Zufuhr bzw. zum Abführen eines elektrischen Stroms von mindestens 1A, besonders bevorzugt mindestens 5A ausgelegt.

Zweckmäßig ist die elektrische Anordnung eine Spannungs- bzw. Stromquelle, d.h. eine Energiequelle, und weist bspw. eine Batterie, ein Ladegerät, ein Solarpanel, eine Brennstoffzelle und/oder einen Generator auf. Das Modul kann somit insbesondere als Ladegerät oder Ladestation, d.h. als "Lademodul" ausgebildet sein. Alternativ oder ergänzend kann die elektrische Anordnung auch als elektrischer Verbraucher, d.h. als Energiesenke ausgebildet sein und bspw. einen Bremswiderstand, eine Batterie im Ladebetrieb, einen Konverter oder eine Leistungseinspeisung für das Stromnetz ggf. mit Wechselrichter für eine "Vehicle-to-Grid"-Kopplung aufweisen.

Die Steuerungseinrichtung kann zur Kommunikation mit dem mindestens einen Modul insbesondere ein oder mehrere Mikroprozessoren oder eine entsprechend eingerichtete Computereinheit mit einer entsprechenden, in einem Speicher abgelegten Programmierung aufweisen.

Die Steuerungseinrichtung kann ein- oder mehrteilig ausgebildet sein, wobei eine zentrale Steuerungseinrichtung bevorzugt ist. Die Steuerungseinrichtung kann auch mit weiteren Komponenten des Fahrzeugs integriert ausgebildet sein, bspw. mit einer Motorsteuerung der elektrischen Antriebseinheit. Bevorzugt entspricht die Steuerungseinrichtung einem "Energybus-Controller (EBC)".

Die Modulsteuerung kann bspw. einen Microcontroller, Microprozessor oder ein anderes geeignetes elektronisches Bauteil, ggf. mit einer entsprechenden Programmierung, aufweisen, so dass eine Kommunikation mit der Steuerungseinrichtung möglich ist.

Wie eingangs erwähnt, weist die Schnittstelle des Elektrofahrzeugs ferner eine erste NFC-Einrichtung und das Anschlusselement eine zweite NFC-Einrichtung auf, welche **mindestens zur bidirektionalen** Nahbereichskommunikation miteinander ausgebildet sind, um die Steuerungseinrichtung des Elektrofahrzeugs mit der Modulsteuerung zu verbinden.

In diesem Zusammenhang wird unter einer Verbindung zwischen der Steuerungseinrichtung und der Modulsteuerung eine Datenverbindung verstanden, welche mindestens eine unidirektionale Kommunikation zwischen den vorstehend genannten Komponenten erlaubt.

Beide Nahfeldkommunikationseinrichtungen sind zur Nahbereichskommunikation, und somit zur drahtlosen Kommunikation miteinander ausgebildet. Hierbei wird unter dem Begriff der "Nahbereichskommunikation" eine drahtlose Kommunikation verstanden, bei der kein signifikantes Fernfeld entsteht. Die Kommunikation kann induktiv, kapazitiv oder optisch erfolgen. Die Reichweite der Kommunikation beträgt vorzugsweise weniger als 2 cm. Die NFC-Einrichtungen können hierbei zur Kommunikation ein geeignetes Kommunikationsprotokoll, wie bspw. ISO 14443, 18092, 21481, ECMA 340, 352, 356, 362 oder ETSI TS 102 190 einsetzen. Insbesondere bevorzugt weist die Nahbereichskommunikation eine Frequenz im ISM-Band, besonders bevorzugt von 13,56 MHz auf.

Wie eingangs bereits diskutiert, kann durch den Einsatz der NFC-Einrichtungen eine zuverlässige Kommunikation zwischen Steuerungseinrichtung des Fahrzeugs und der Modulsteuerung bereitgestellt werden. Dies insbesondere, wenn die Steckverbindung der Witterung ausgesetzt ist, was leicht zu Kontaktkorrosion oder verschmutzten Kontakten führen kann. Während dies bei den bei der Verbindung zwischen Leistungsbordnetz und elektrischer Anordnung auftretenden hohen Strömen regelmäßig unproblematisch ist, sind Kontakte elektrisch leitender Datenverbindungen weitaus empfindlicher. Die Erfindung vermeidet entsprechende Kontaktprobleme in vorteilhafter Weise. Hierbei erhöht der Einsatz einer Nahbereichskommunikation gleichzeitig die Sicherheit der Kommunikation, verbessert die Störsicherheit und erleichtert die Adressierung gegenüber einem Einsatz von bspw. Wi-Fi / WLAN. Auch stellt die Erfindung, wie bereits erwähnt, eine vorteilhafte galvanische Trennung mindestens zwischen Steuerungseinrichtung und Modulsteuerung bereit.

Die erste und zweite NFC-Einrichtung können sämtliche geeignete Ausgestaltungen aufweisen, um eine Nahbereichskommunikation miteinander bereitzustellen. Gemäß einer zweckmäßigen Ausführungsform ist zumindest eine der beiden NFC-Einrichtungen integral mit der Schnittstelle bzw. dem Anschlusselement ausgebildet, was eine äußerst kompakte Bauform bereitstellt. Hierbei kann die jeweilige NFC-Einrichtung derart "gekapselt" in einem Gehäuse der Schnittstelle bzw. des Anschlusselements angeordnet sein, dass diese vor Witterungseinflüssen bzw. Beschädigung geschützt ist.

**Erfindungsgemäß** sind die beiden NFC-Einrichtungen zur bidirektionalen Kommunikation ausgebildet. Insbesondere bevorzugt sind beide NFC-Einrichtungen aktiv ausgebildet. Eine Spannungsversorgung kann hierbei bspw. über das Hilfsbordnetz erfolgen.

Nach einer weiteren alternativen oder ergänzenden Ausführungsform können die NFC-Einrichtungen zusätzlich zur Übertragung von Energie ausgebildet sein, insbesondere zur elektrischen Energieversorgung der Steuerungseinheit des Elektrofahrzeugs und/oder der Modulsteuerung.

Gemäß der vorliegenden Ausführungsform erlauben die NFC-Einrichtungen neben der Bereitstellung einer Kommunikations- bzw. Datenverbindung gleichzeitig die Übertragung von elektrischer Energie, was besonders vorteilhaft ist. Möglich ist hierbei einerseits die elektrische Energieversorgung der Steuerungseinheit im Fahrzeug durch das Modul, bspw. falls die interne Batterie vollständig entleert sein sollte, oder aber die elektrische Energieversorgung der Modulsteuerung durch eine fahrzeugseitig vorhandene Spannungsquelle. Entsprechend erlaubt die vorliegende Ausgestaltung eine Kommunikation zwischen Steuerungseinrichtung und Modulsteuerung, selbst bei vollständig entleerter Fahrzeugbatterie und bei Beibehaltung einer galvanischen Trennung.

Im Rahmen der vorliegenden Ausgestaltung wird unter Übertragung von Energie bzw. elektrischer Energieversorgung die Übertragung einer elektrischen Leistung von mindestens 1 Watt bis bspw. maximal 24 Watt verstanden.

Wie eingangs erwähnt, kann das Elektrofahrzeug ferner ein Hilfsbordnetz aufweisen, welches weitere elektrische Baugruppen, wie Steuerungen, Armaturen, Bedienelemente und/oder Beleuchtungseinrichtungen mit elektrischer Energie versorgt. Insbesondere kann das Hilfsbordnetz zur elektrischen Energieversorgung der Steuerungseinrichtung ausgebildet sein.

Gemäß eines weiteren Ausführungsbeispiels sind die NFC-Einrichtungen zur Übertragung von elektrischer Energie zwischen Hilfsbordnetz des Fahrzeugs und Modul ausgebildet. Insbesondere kann hierbei eine Verbindung zwischen dem Hilfsbordnetz und einem Hilfsmodulnetz des Moduls erfolgen. Das Hilfsmodulnetz kann hierbei bspw. mit der Modulsteuerung verbunden sein, so dass die Modulsteuerung entsprechend mit elektrischer Energie aus dem Hilfsbordnetz versorgt werden kann. Alternativ oder ergänzend, bspw. im Falle eines "Lademoduls" wie eingangs erwähnt, kann das Hilfsmodulnetz mit einer Spannungsquelle, bspw. einem 12V- oder 14V-Netzteil verbunden sein, um ggf. die Modulsteuerung und die Steuerungseinrichtung des Elektrofahrzeugs mit der für den ordnungsgemäßen Betrieb dieser Komponenten notwendigen elektrischen Energie zu versorgen.

Zur elektrischen Energieübertragung können die NFC-Einrichtungen sämtliche geeignete Ausgestaltungen aufweisen. Die Energieübertragung kann hierbei kapazitiv oder induktiv erfolgen.

Gemäß einer Ausführungsform weist die erste und die zweite NFC-Einrichtung jeweils eine NFC-Spule auf, deren Spulenachse orthogonal zur Steckrichtung und bei bestimmungsgemäßer Verbindung von Schnittstelle und Anschlusselement zueinander parallel angeordnet sind. Dadurch wird eine besonders gute Übertragung von Signalen einerseits und ggf. eine effiziente Energieübertragung andererseits mittels der NFC-Einrichtungen sichergestellt.

Die erste und die zweite NFC-Einrichtung können insbesondere derart ausgebildet sein, dass sich ihre Spulenachsen bei bestimmungsgemäßer Verbindung der Steckverbindung im Wesentlichen vollständig, d.h. bspw. mit ggf. +- 2mm Toleranz, überdecken.

Zweckmäßig sind Schnittstelle und Anschlusselement zur galvanischen Verbindung der elektrischen Anordnung des Moduls mit dem Leistungsbordnetz des Elektrofahrzeugs ausgebildet, während Steuerungseinrichtung und Modulsteuerung galvanisch getrennt sind. Auf diese Weise können hohe Spannungen und/oder Ströme zwischen der elektrischen Anordnung des Moduls mit dem Leistungsbordnetz des Elektrofahrzeugs übertragen werden, während eine (versehentliche) Übertragung zu hoher Spannungen und/oder Ströme zwischen der Steuerungseinrichtung und der Modulsteuerung ausgeschlossen werden kann. Entsprechend ist das Risiko einer Fehlbedienung weiter reduziert.

Gemäß eines weiteren Ausführungsbeispiels können Schnittstelle und Anschlusselement zur galvanischen Verbindung der elektrischen Anordnung des Moduls mit dem Leistungsbordnetz des Elektrofahrzeugs auf mehreren Spannungsebenen ausgebildet sein. Wie eingangs diskutiert, kann dies bspw. für eine Schnelladung einer Batterie zweckmäßig sein. Bevorzugt weist das Leistungsbordnetz und/oder die elektrische Anordnung des Moduls hierbei zwei Spannungsebenen auf voneinander getrennten Leitern auf.

Zweckmäßig weisen Schnittstelle und Anschlusselement mindestens ein erstes Kontaktelement zur Verbindung des Leistungsbordnetzes mit der elektrischen Anordnung auf einer ersten Spannungsebene sowie mindestens ein zweites Kontaktelement zur Verbindung des Leistungsbordnetzes des Elektrofahrzeugs mit der elektrischen Anordnung auf einer zweiten, unterschiedlichen Spannungsebene auf. Die zweite Spannungsebene kann hierbei einer Schnelladeleitung entsprechen. Im Falle eines "Lademoduls" kann entsprechend die elektrische Anordnung eine Spannungsversorgung aufweisen, welche mindestens zwei Spannungen bereitstellt.

Nach einer weiteren alternativen oder ergänzenden Ausführungsform kann die erste und/oder die zweite NFC-Einrichtung eine NFC-Steuerung aufweisen. Diese kann insbesondere zur Kommunikation mit der Steuerungseinrichtung ausgebildet sein und somit eine Identifikation der jeweiligen NFC-Einrichtung erlauben. Die vorliegende Ausführungsform kann insbesondere dann zweckmäßig sein, wenn das Elektrofahrzeug mit mehr als einer Schnittstelle ausgebildet ist. In diesem Fall läßt sich ermitteln, welches Modul mit welcher Schnittstelle verbunden ist, so dass eine Zuordnung dieser möglich ist. Es ist von besonderem Vorteil, wenn die NFC-Steuerung logisch adressierbar ist. Dies erlaubt eine Analyse der Strompfade und ggf. der Datenpfade bzw. - kommunikation.

Zweckmäßig ist die NFC-Steuerung zur Strom- und/oder Spannungsmessung auf dem Leistungsbordnets bzw. dem Hilfsbordnetz ausgebildet, bspw. mit einer entsprechenden Messeinheit. Diese Ausgestaltung erlaubt eine Überwachung der elektrischen Verbindung, bspw. eines Ladevorgangs. Alternativ oder ergänzend ist die NFC-Steuerung zur Steuerung einer Schalteinheit und/oder eines Verriegelungsantriebs, wie nachstehend erläutert, ausgebildet.

Die NFC-Steuerungen können integral mit der jeweiligen NFC-Einrichtung ausgebildet sein oder als separate Steuerung vorgesehen sein. Gemäß einer Ausführungsform ist die NFC-Steuerung der zweiten NFC-Einrichtung integral mit der Modulsteuerung, bspw. in einem Mikroprozessor, ausgebildet.

Nach einer weiteren alternativen oder ergänzenden Ausführungsform der Erfindung ist an der Schnittstelle ein erstes Verriegelungsmittel angeordnet. An dem Anschlusselement ist ein zweites Verriegelungsmittel angeordnet, das zum Eingriff mit dem ersten Verriegelungsmittel ausgebildet ist.

Mindestens eines der Verriegelungsmittel kann zwischen einer freien Position (entriegelt) und einer Verriegelungsposition (gesperrt) bewegbar sein. In der freien Position ist das Anschlusselement von der Schnittstelle trennbar. In der Verriegelungsposition das Anschlusselement mit der Schnittstelle mechanisch verriegelt. Bei dieser Ausführungsform kann neben einer elektrischen Verbindung zwischen Fahrzeug und Modul im verbundenen Betriebszustand gleichzeitig eine mechanische Verriegelung der Komponenten bewerkstelligt werden.

Die vorliegende Ausführungsform ermöglicht somit eine sichere Verbindung zwischen Fahrzeug und Modul, was die Betriebssicherheit erhöht und die Gefahr eines Eingriffs unberechtigter Personen reduziert. Besonders vorteilhaft ist hierbei, dass sowohl die elektrische Verbindung als auch die mechanische Verriegelung über die mindestens eine Schnittstelle des Fahrzeugs und das Anschlusselement des Moduls erfolgt. Das System ist somit besonders benutzerfreundlich und lässt sich schnell und einfach bedienen.

Die gemäß der vorliegenden Ausführungsform vorgesehenen Verriegelungsmittel können sämtliche geeignete Ausgestaltungen aufweisen, um Anschlusselement und Schnittstelle in der Verriegelungsposition miteinander zu verriegeln, d.h. mechanisch aneinander zu fixieren, so dass ein unbeabsichtigtes Trennen des Moduls vom Fahrrad vermieden wird. Somit ist es bspw. möglich, ein Trennen von Fahrzeug und Modul "unter Last" zu vermeiden, was die Betriebssicherheit deutlich erhöht. Ferner kann, je nach Ausgestaltung, auch ein unberechtigtes Entfernen des Moduls vom Fahrzeug verhindert werden, wodurch ein gewisser Diebstahlschutz gegeben ist.

Bevorzugt sind die Verriegelungsmittel als korrespondierende Elemente ausgeführt. Hierbei kann eines der Verriegelungselemente bspw. als Bügel, Nut, Ausnehmung oder Öffnung ausgebildet sein, in welche das jeweils andere Verriegelungselement eingreift, welches bevorzugt als Stift, Bolzen oder Riegelnocken ausgebildet ist. Insbesondere bevorzugt ist das zweite Verriegelungsmittel zum formschlüssigen Eingriff mit dem ersten Verriegelungsmittel ausgebildet.

Die Verriegelungsmittel können einteilig oder mehrteilig ausgebildet sein, wobei das erste Verriegelungsmittel bevorzugt integral mit der Schnittstelle ausgebildet ist. Zweckmäßig ist das zweite Verriegelungsmittel integral mit dem Anschlusselement ausgebildet.

Falls das Fahrzeug mehrere Schnittstellen aufweist, sollte bevorzugt jede der Schnittstellen ein zugeordnetes Verriegelungsmittel aufweisen.

Wie eingangs diskutiert, kann mindestens das erste oder das zweite Verriegelungsmittel von einer freien Position in eine Verriegelungsposition und umgekehrt bewegbar sein. Es können jedoch auch beide Verriegelungsmittel bewegbar ausgebildet sein. Bevorzugt ist mindestens das zweite, d.h. das modulseitige Verriegelungsmittel bewegbar ausgebildet, wo durch die fahrzeugseitige Schnittstelle vorteilhaft besonders einfach und kompakt ausgebildet sein kann.

Das jeweilige Verriegelungsmittel kann bspw. so ausgebildet sein, dass dieses linear oder rotatorisch von der freien Position in die Verriegelungsposition bewegbar ist. Je nach Anwendung kann das entsprechende Verriegelungsmittel jedoch auch hier mehrere überlagerte Bewegungen, bspw. alternativ oder ergänzend schwenk-, bzw. drehbar ausgebildet sein, wobei das Verriegelungsmittel bevorzugt durch eine besonders einfach zu realisierende Bewegung von der freien Position in die Verriegelungsposition bewegbar ist. Bevorzugt ist mindestens ein Verriegelungsmittel in einer Richtung bewegbar, senkrecht zu einer Verbindungs- bzw. Trennrichtung von Schnittstelle und Anschlusselement, d. h. senkrecht zu der Richtung, in der Schnittstelle bzw. Anschlusselement zu bewegen ist, um miteinander in Eingriff zu kommen, bzw. die Verbindung zu trennen.

Im Rahmen der vorliegenden Erfindung wird unter einer "freien Position" bzw. "Entriegelungsposition" eine Position der Verriegelungsmittel verstanden, die ein Trennen des Anschlusselements von der Schnittstelle grundsätzlich erlaubt. Naturgemäß kann eine weitere Sicherung oder ein Verschluss an Fahrzeug und/oder Modul angeordnet sein, die selbst in der freien Position eine selbstständige Trennung des Anschlusselements von der Schnittstelle verhindert, wie bspw. eine zusätzliche mechanische und/oder magnetische Rastierung bzw. Fixierung.

In der Verriegelungsposition sind, wie bereits eingangs diskutiert, Anschlusselement und Schnittstelle miteinander verriegelt, d.h. mechanisch derart fixiert, dass ein unbeabsichtigtes Trennen des Moduls vom Fahrzeug vermieden wird. Die beiden Verriegelungsmittel sind in dieser Position derart in Eingriff miteinander, dass ein Trennen von Anschlusselement und Schnittstelle, d.h. eine größere Bewegung dieser Bauteile relativ zueinander in der Trennrichtung, blockiert ist. Die Haltekraft der Verbindung zwischen Anschlusselement und Schnittstelle durch die Verriegelung ist bevorzugt derart, dass im verriegelten Zustand ein Auseinanderwuchten von Schnittstelle und Anschlusselement mithilfe des Körpergewichtes einer Person verhindert wird. Hierzu sollte die verriegelte Verbindung zwischen Anschlusselement und Schnittstelle bevorzugt für eine Haltekraft von 500 N und bevorzugt 730 N ausgebildet sein. Ein selbstständiges Lösen der Verriegelung kann zusätzlich vorgesehen sein, um eine Beschädigung der Komponenten zu vermeiden, bspw. wenn die vorgegebene Haltekraft überschritten wird.

Das mindestens eine Verriegelungsmittel kann derart ausgebildet sein, dass dieses manuell zwischen der freien Position und der Verriegelungsposition bewegbar ist. Hierzu kann das jeweilige Verriegelungsmittel mit einem geeigneten Betätigungselement, bspw. mit einem entsprechenden manuell zu betätigenden Druckknopf oder Hebel ausgebildet sein.

Bevorzugt ist das Verriegelungsmittel mit einem abschließbaren Betätigungselement, wie bspw. einem Schloss und insbesondere einem Schließzylinder ausgebildet. Hierdurch ist ein verbesserter Schutz gegenüber Eingriffen Dritter, wie bspw. Diebstahl, ermöglicht.

Neben einer manuellen Betätigung kann das Verriegelungsmittel auch ergänzend oder alternativ mit einem motorischen Verriegelungsantrieb zwischen der freien Position und der Verriegelungsposition bewegbar ausgebildet sein, wie bspw. mittels einer oder mehrerer Federn und/oder einem pneumatischen, hydraulischen oder anderweitigen motorischen Verriegelungsantrieb.

Bevorzugt ist das Verriegelungsmittel mit einer Federanordnung verbunden, um eine Rückstellkraft bereitzustellen. Hierdurch kann ein motorischer Verriegelungsantrieb besonders einfach ausgebildet sein, da nur eine Bewegungsrichtung des Verriegelungsmittels, nämlich entgegen der Federkraft, motorisch angetrieben werden muss.

Gemäß einer bevorzugten Ausführungsform ist am ersten und/oder zweiten Verriegelungsmittel ein elektrisch betätigbarer Verriegelungsantrieb angeordnet, der dazu ausgelegt ist, mindestens eines, d.h. das erste und/oder das zweite der Verriegelungsmittel zwischen der freien Position und der Verriegelungsposition zu bewegen.

Der elektrisch betätigbare Verriegelungsantrieb kann hierzu sämtliche geeignete Ausgestaltungen aufweisen und bspw. als Elektromotor ausgebildet sein. Der Verriegelungsantrieb kann sowohl direkt, als auch über ein weiteres mechanisches System, wie bspw. eine Antriebsschnecke oder ein Zahnradsystem, mit dem jeweiligen Verriegelungsmittel verbunden sein, um dieses zwischen der freien Position und der Verriegelungsposition zu bewegen.

Der Antrieb für das Verriegelungsmittel kann sowohl am Elektrofahrzeug als auch am Modul angeordnet sein. Sofern beide Verriegelungsmittel bewegbar ausgebildet sind, kann sowohl am Elektrofahrzeug als auch am Modul jeweils ein zugehöriger Verriegelungsantrieb angeordnet sein.

Besonders bevorzugt ist der Verriegelungsantrieb an dem modulseitigen Anschlusselement angeordnet. Hierdurch ist eine besonders einfache und kompakte fahrzeugseitige Schnittstelle ermöglicht. Ferner sind somit im Falle eines Lademoduls mechanisch bewegbare Teile nicht fahrzeugseitig angeordnet, wodurch ein besonders vorteilhafter Schutz gegenüber äußeren Einflüssen wie bspw. Feuchtigkeit und mechanischer Beschädigung durch Erschütterungen während des Betriebs des Fahrzeugs gegeben ist. Außerdem kann, bspw. im Falle von Störungen, unabhängig vom Elektrofahrzeug auf den Verriegelungsantrieb zugegriffen werden, um bspw. bei Reparaturen oder Wartungsarbeiten Fahrzeug und Modul leicht voneinander zu trennen.

Die Aktivierung des Verriegelungsantriebs kann durch sämtliche geeignete Vorrichtungen erfolgen. Bspw. ist es denkbar, einen Schaltkontakt vorzusehen, der den Verriegelungsantrieb bei Verbinden des Anschlusselements mit der Schnittstelle betätigt, um die Komponenten zu verriegeln. Als Schaltkontakt kann bspw. ein mechanischer Sensor oder auch ein berührungsfreier Sensor, wie bspw. ein akustischer oder optischer Sensor, verwendet werden.

Gemäß eines Ausführungsbeispiels ist die Modulsteuerung dazu ausgebildet, die Position des zweiten Verriegelungsmittels festzulegen und den Verriegelungsantrieb entsprechend zu steuern.

So ist es bspw. denkbar, dass im Falle eines Lademoduls die Modulsteuerung bei Verbindung von Schnittstelle mit Anschlusselement den Verriegelungsantrieb aktiviert und die Verriegelungsmittel verriegelt. Nach abgeschlossenem Ladevorgang der im Fahrzeug vorhandenen Batterie wird der Verriegelungsantrieb wiederum aktiviert und Schnittstelle und Anschlusselement entsprechend automatisch entriegelt. Hierdurch kann verhindert werden, dass der Ladevorgang vorzeitig unterbrochen wird, was für übliche Batterien nachteilhaft sein kann.

Alternativ oder ergänzend kann die Modulsteuerung mit einem Bedienfeld verbunden sein, so dass die Verriegelung und/oder Entriegelung nur nach Eingabe eines PIN-Codes erfolgt. Somit kann insbesondere in öffentlichen Bereichen ein unberechtigtes Entfernen eines Moduls oder des Fahrzeugs verhindert werden.

Bei einer weiteren Ausführungsform ist die Steuerungseinrichtung ausgebildet, um ein Aktivierungssignal an dem mindestens einen Verriegelungsantrieb zu senden, um das Anschlusselement mit der Schnittstelle zu verriegeln. Des Weiteren oder alternativ ist die Steuerungseinrichtung ausgebildet, ein Deaktivierungssignal an den mindestens einen Verriegelungsantrieb zu senden und das Anschlusselement und die Schnittstelle zu entriegeln.

Hierzu kann die Steuerungseinrichtung bspw. mit einem entsprechenden Bedienfeld verbunden sein, so dass das Deaktivierungssignal entsprechend einer Benutzereingabe gesendet wird, bspw. wenn der Benutzer die Trennung des Moduls vom Fahrzeug verlangt. Alternativ oder ergänzend kann die Steuerungseinrichtung ausgebildet sein, um das Deaktivierungssignal automatisch zu senden, bspw. im Falle der Verbindung eines Lademoduls, wenn der Ladevorgang beendet ist.

Das Aktivierungssignal kann hierbei direkt von der Steuerungseinrichtung oder indirekt bspw. über die Modulsteuerung an den Verriegelungsantrieb gesendet werden. Das Aktivierungssignal kann hierbei ein entsprechend geeignetes, bevorzugt elektrisches Signal sein; besonders bevorzugt ist das Aktivierungssignal ein digitales Signal.

Gemäß eines weiteren alternativen oder ergänzenden Ausführungsbeispiels ist die Modulsteuerung insbesondere dazu ausgebildet, beim Verbinden des Anschlusselements mit der Schnittstelle ein Identifikationssignal an die Steuerungseinrichtung zu senden.

Die Steuerungseinrichtung kann hierbei ergänzend dazu ausgebildet sein, das Identifikationssignal zu empfangen, mit mindestens einem Kompatibilitätsparameter zu vergleichen und bei Übereinstimmung des Identifikationssignals mit dem Kompatibilitätsparameter einen oder mehrere der nachfolgenden Verfahrensschritte durchzuführen.

Unter einen solchen Verfahrensschritt kann zum Beispiel das Senden eines Aktivierungssignals an mindestens eine Schalteinheit fallen, um die elektrische Anordnung mit dem Leistungsbordnetz zu verbinden. Ein weiteres Beispiel für einen solchen zusätzlichen Verfahrensschritt ist die Durchführung einer Verriegelung mittels des zuvor beschriebenen Verriegelungsantriebs. Anders ausgedrückt kann bspw. im Falle, dass das Identifikationssignal mit dem Kompatibilitätsparameter übereinstimmt, ein erstes Aktivierungssignal an den mindestens einen Verriegelungsantrieb gesendet werden, um das Anschlusselement mit der Schnittstelle zu verriegeln und/oder ein zweites Aktivierungssignal an die mindestens eine Schalteinheit gesendet werden, um die elektrische Anordnung mit dem Leistungsbordnetz zu verbinden. Die zeitliche Abfolge des ersten und zweiten Aktivierungssignals kann entsprechend der Anwendung gewählt werden. Hierbei kann das erste Aktivierungssignal vor, zeitgleich oder nach dem zweiten Aktivierungssignal gesendet werden.

In vorteilhafter Weise ist somit gemäß des vorliegenden Ausführungsbeispiels vorgesehen, dass die Schnittstelle des Elektrofahrzeuges nur dann mit dem Anschlusselement des Moduls verriegelt wird, wenn bspw. die Kompatibilität bzw. Berechtigung hierzu sichergestellt ist. Es ist somit beispielsweise möglich, zu gewährleisten, dass nur kompatible bzw. berechtigte Fahrzeuge an Modulen, wie bspw. einer Ladestation oder auch nur kompatible bzw. berechtigte Module, wie bspw. Original-Batterien, mit dem Fahrzeug verwendet und verriegelt werden können. Die vorliegende Kompatibilitätsprüfung erhöht die Betriebssicherheit weiter.

Die Modulsteuerung kann, wie eingangs erwähnt, so ausgelegt sein, dass mindestens beim Verbinden des Anschlusselements des Moduls mit der Schnittstelle des Elektrofahrzeugs oder kurz danach das Identifikationssignal an die Steuerungseinrichtung gesendet wird.

Das Identifikationssignal ermöglicht der Steuerungseinrichtung einen Vergleich mit mindestens einem Kompatibilitätsparameter und somit eine Entscheidung hinsichtlich der Kompatibilität bzw. Berechtigung zum Betrieb des Moduls mit dem Fahrzeug. Bspw. kann das Identifikationssignal der Steuerungseinrichtung eine Entscheidung hinsichtlich der Kompatibilität der elektrischen Anordnung des Moduls mit dem Leistungsbordnetz ermöglichen, d.h. eine Prüfung, ob die Anordnung sicher mit dem Leistungsbordnetz verbunden werden kann. Bevorzugt ist das Identifikationssignal ein digitales Signal, was insbesondere hinsichtlich der Zuverlässigkeit vorteilhaft ist.

Im einfachsten Fall erlaubt das Identifikationssignal eine Identifikation des Moduls, so dass, ggf. nach Abfrage einer entsprechenden in der Steuerungseinrichtung vorgesehenen Speichereinheit, eine Prüfung möglich ist, ob das Modul mit dem Elektrofahrzeug verbunden werden darf bzw. ob das Modul mit dem Leistungsbordnetz und somit mit dem Fahrzeug kompatibel ist. So kann das Identifikationssignal einem Identifikationsparameter, wie bspw. einen Zugangs- oder PIN-Code, einer Seriennummer und/oder einer Typen-ID, ggf. mit Hersteller-ID, entsprechen. Alternativ oder ergänzend kann das Identifikationssignal einer Funktions-ID hinsichtlich der Funktionalität der elektrischen Komponente entsprechen, wie bspw. "Energiequelle" oder "Energiesenke", bzw. "Batterie", "Ladegerät" oder "Solarpanel".

Der mindestens eine Kompatibilitätsparameter kann bspw. einen oder mehrere Vergleichswerte und/oder einen oder mehrere Schwellenwerte aufweisen. Naturgemäß kann die Steuerungseinrichtung auch zum Vergleich von mehreren Kompatibilitätsparametern ausgebildet sein. Der mindestens eine Kompatibilitätsparameter kann in der Steuerungseinrichtung fest vorgegeben oder bevorzugt aus einer Speichereinheit durch die Steuerungseinheit abgefragt werden. Alternativ oder ergänzend kann eine Messeinheit mit der Steuerungseinheit verbunden sein, um eine elektrische Größe des Leistungsbordnetzes, wie bspw. Spannung oder Stromfluss zu messen und daraus entsprechend einen oder mehrere Kompatibilitätsparameter zu ermitteln. Die Messeinheit kann hierbei bspw. über eine der NFC-Einrichtungen abgefragt werden.

Wie eingangs erwähnt, kann die Steuerungseinrichtung gemäß eines Ausführungsbeispiels nach erfolgter Kompatibilitätsprüfung, somit im Falle, dass das Identifikationssignal mit dem Kompatibilitätsparameter übereinstimmt, ein zweites Aktivierungssignal an die mindestens eine Schalteinheit senden, um die elektrische Anordnung mit dem Leistungsbordnetz zu verbinden.

Die Schalteinheit sorgt für eine schaltbare, trennbare Verbindung der elektrischen Anordnung des Moduls mit dem Leistungsbordnetz. Grundsätzlich sollte die Schalteinheit derart ausgebildet sein, dass vor der Aktivierung der Schalteinheit durch die Steuerungseinrichtung die elektrische Anordnung sicher vom Leistungsbordnetz getrennt ist, somit auch in dem Zeitraum zwischen dem Verbinden des Anschlusselements mit der Schnittstelle und der Aktivierung der Schalteinheit durch die Steuerungseinrichtung.

Die vorliegende Ausbildung sorgt somit für eine sichere galvanische Trennung der elektrischen Anordnung des Moduls vom Leistungsbordnetz vor der Kompatibilitätsprüfung. Im Falle, dass das Identifikationssignal mit dem Kompatibilitätsparameter übereinstimmt, kann bspw. zunächst die vorstehend beschriebene Verriegelung von Schnittstelle und Anschlusselement durch Senden des ersten Aktivierungssignals erfolgen und dann die elektrische Verbindung zwischen Leistungsbordnetz und elektrischer Anordnung des Moduls hergestellt werden. Somit wird die Betriebssicherheit dadurch weiter erhöht, dass zunächst die ordnungsgemäße Verbindung und Verriegelung des Moduls am Fahrzeug sichergestellt wird, bevor die elektrische Verbindung zwischen Leistungsbordnetz und elektrischer Anordnung des Moduls hergestellt wird.

Bevorzugt ist die Steuerungseinrichtung daher ausgebildet, um zunächst das erste Aktivierungssignal an den Verriegelungsantrieb und dann das zweite Aktivierungssignal an die Schalteinheit zu senden.

Zur Betätigung der Schalteinheit ist diese mit der Steuerungseinrichtung zum Empfang des zweiten Aktivierungssignals geeignet verbunden, wobei naturgemäß neben einer direkten Verbindung auch eine indirekte Verbindung, bspw. über weitere Komponenten des Fahrzeugs oder des Moduls, wie bspw. über eine der NFC-Einrichtungen oder die Modulsteuerung, möglich ist.

Die Schalteinheit kann zum ein- oder mehrpoligen Schalten der Verbindung zwischen elektrischer Anordnung und Leistungsbordnetz ausgebildet sein, solange sichergestellt ist, dass vor der Aktivierung durch die Steuerungseinrichtung kein nennenswerter elektrischer Strom zwischen der Anordnung und dem Leistungsbordnetz fließt. Bevorzugt ist die Schalteinheit zum allpoligen Schalten der Verbindung zwischen elektrischer Anordnung und Leistungsbordnetz ausgebildet, was die Betriebssicherheit weiter vorteilhaft erhöht. Die Schalteinheit kann diskret, bspw. als Relais oder Schütz, als auch als integrierter Schaltkreis, bspw. als MOSFET, ausgebildet sein.

Die Schalteinheit kann hierbei ein- oder mehrteilig ausgebildet und grundsätzlich im Fahrzeug angeordnet sein, was hinsichtlich Gewicht und Baugröße des Moduls vorteilhaft ist. Bevorzugt ist jedoch die Schalteinheit in dem mindestens einen Modul vorgesehen. Hierdurch kann das Leistungsbordnetz in einfacher Weise durch Hinzufügung weiterer Schnittstellen erweitert werden, ähnlich eines Bussystems. Im Falle von mehreren Modulen sollte naturgemäß jedes Modul eine entsprechende Schalteinheit aufweisen.

Bevorzugt ist die Schalteinheit integral mit dem Anschlusselement ausgebildet, wodurch eine besonders kompakte Bauform erreicht wird. Besonders bevorzugt ist die Modulsteuerung integral mit dem Anschlusselement und insbesondere integral mit der Schalteinheit ausgebildet. Zweckmäßig ist ein optischer Indikator, wie bspw. eine LED, mit der Schalteinheit zur Anzeige des Verbindungszustands verbunden.

Nach einer bevorzugten Weiterbildung der Erfindung ist die Steuerungseinrichtung dazu ausgelegt, mindestens einen elektrischen Betriebsparameter der Anordnung aus dem Identifikationssignal zu ermitteln und den Betriebsparameter mit mindestens einem elektrischen Kompatibilitätsparameter des Leistungsbordnetzes zu vergleichen.

Hierdurch ist eine vorteilhafte Kompatibilitätsprüfung anhand der elektrischen Eigenschaften der zu verbindenden Netze ermöglicht, was die Sicherheit des Systems weiter erhöht. Der elektrische Betriebsparameter der Anordnung und der elektrische Kompatibilitätsparameter des Leistungsbordnetzes kann hierbei jede für den Vergleich geeignete elektrische Größe oder Bereich sein, wie bspw. Spannung, Strom, Leistung und/oder Batteriekapazität.

Naturgemäß kann vorgesehen sein, mehrere elektrische Betriebsparameter der Anordnung mit entsprechen Kompatibilitätsparametern zu vergleichen.

Die Modulsteuerung kann bspw. ausgebildet sein, um den mindestens einen elektrischen Betriebsparameter aus einem modulseitigen Speicher abzufragen und anschließend ein entsprechendes Identifikationssignal an die Steuerungseinheit des Fahrzeugs zu senden. Dies ist insbesondere dann vorteilhaft, wenn der elektrische Betriebsparameter einem Arbeitsbereich der elektrischen Anordnung des Moduls entspricht, bspw. dem zulässigen Spannungsbereich und/oder einem maximal zulässigen Strom der Anordnung.

Alternativ oder ergänzend kann die Modulsteuerung mindestens eine Messeinheit aufweisen oder mit einer solchen verbunden sein, um den elektrischen Betriebsparameter durch Messung zu ermitteln. Im Falle einer Spannungsquelle, wie einer Batterie oder einem Ladegerät, ist es somit möglich, die aktuelle Spannung zu ermitteln und ein entsprechendes Identifikationssignal an die Steuerungseinrichtung zu senden.

In gleicher Weise kann die Steuerungseinrichtung, wie eingangs diskutiert, den mindestens einen elektrischen Kompatibilitätsparameter des Leistungsbordnetzes aus der Speichereinheit bzw. einer im Fahrzeug vorgesehenen Messeinheit ermitteln.

Insbesondere bevorzugt weist sowohl die Modulsteuerung mindestens eine Messeinheit zur Messung der Spannung der elektrischen Anordnung als auch die Steuerungseinrichtung eine fahrzeugseitige Messeinheit zur Messung der Spannung des Leistungsbordnetzes auf. Zweckmäßig kann die Modulsteuerung eine zweite Messeinheit aufweisen, um nach der Verbindung mit einer der Schnittstellen zu ermitteln, ob das Leistungsbordnetz überhaupt spannungsversorgt ist.

Bevorzugt übermittelt die Modulsteuerung das Identifikationssignal, welches mindestens der Spannung der elektrischen Anordnung entspricht. Die Steuerungseinrichtung ermittelt die Spannung der elektrischen Anordnung aus dem Identifikationssignal und vergleicht die Spannung der elektrischen Anordnung mit der Spannung des Leistungsbordnetzes. Die Steuerungseinrichtung sendet in diesem Fall das oder die Aktivierungssignale, wenn die beiden Spannungen nicht wesentlich voneinander abweichen, d.h. bevorzugt um nicht mehr als ± 0,5 V, insbesondere nicht mehr als ± 0,15 V und besonders bevorzugt nicht mehr als ± 0,05 V.

Naturgemäß ist es je nach Anwendung nicht ausgeschlossen, dass das Identifikationssignal mehreren Betriebsparametern und/oder Identifikationsparametern entspricht und die Steuerungseinrichtung zum Vergleich dieser mit entsprechenden Kompatibilitätsparametern ausgebildet ist.

Wie eingangs erwähnt, sind Elektrofahrzeug und Modul gemäß der vorliegenden Erfindung über eine Steckverbindung verbindbar. In diesem Kontext wird unter einer Steckverbindung bzw. einem Steckverbinder ein trennbares Bauteil verstanden, welches mit einem korrespondierenden Bauteil zu verbinden ist und eine galvanische, also leiterbasierte, trennbare Verbindung zwischen Leistungsbordnetz und elektrischer Anordnung bereitstellt.

Die Steckverbindung sollte bevorzugt derart ausgebildet sein, dass eine sichere Verbindung zwischen Leistungsbordnetz des Fahrzeugs und der elektrischen Anordnung des Moduls möglich ist. Insbesondere sollte die Steckverbindung an die elektrischen Anforderungen der jeweiligen Anordnung, besonders hinsichtlich Strom und Spannung, ausgebildet sein. Zweckmäßig ist die Steckverbindung für einen elektrischen Strom von mindestens 3A, insbesondere mindestens 5A bei einer Spannung von 10V - 100V, insbesondere 12V - 48V ausgelegt.

Übliche Steckverbinder bzw. Steckverbindungen sind bspw. Buchsen, die als Aufnahmen für Stecker ausgelegt sind. Es ist hierbei möglich, das Anschlusselement oder die Schnittstelle als Buchse oder Stecker auszuführen. Vorteilhaft, da besonders wartungsarm und pflegeleicht, wird das modulseitige Anschlusselement als Buchse ausgeführt. In diesem Falle kann die Schnittstelle als zur Buchse korrespondierender Stecker ausgebildet sein.

Bevorzugt weist die Steckverbindung mindestens zwei elektrische Kontaktelemente auf, so dass das Leistungsbordnetz mit der elektrischen Anordnung verbunden werden kann. Insbesondere bevorzugt weist die Steckverbindung drei elektrische Kontaktelmente auf, bspw. zur Verbindung von +60V, -120V sowie eines Masseanschlusses zwischen Leistungsbordnetz und elektrischer Anordnung. Kontaktelemente für die Übertragung eines Kommunikationssignals, wie bspw. eines CAN-Bussystems, und ggf. zur elektrischen Verbindung des eingangs diskutierten Hilfsbordnetzes mit dem Modul sind nicht notwendig.

Gemäß einer besonders bevorzugten Weiterbildung der Erfindung ist zwischen der Schnittstelle und dem Elektrofahrzeug und/oder dem Anschlusselement und dem Modul ein flexibles Verbindungsmittel angeordnet. Hierdurch wird die Bedienbarkeit des Fahrzeugsystems weiter vereinfacht und ein Verbinden des Moduls mit dem Fahrzeug weiter erleichtert.

Das Verbindungsmittel kann hierbei ein- oder mehrteilig ausgebildet sein. Bevorzugt ist das Verbindungsmittel schlauch- bzw. kabelartig aufgebaut und weist neben entsprechenden elektrischen Leitern zur Verbindung des Leistungsbordnetzes mit der elektrischen Anordnung des Moduls ein Sicherungselement aus einem gegen mechanische Belastungen widerstandsfähigen Material, wie bspw. eine metallische Armierung oder ein Stahlseil, auf. Bevorzugt ist das Sicherungselement integral mit der Schnittstelle bzw. mit dem Anschlusselement ausgeführt bzw. derart mit Schnittstelle bzw. Anschlusselement bzw. einem der Verriegelungsmittel befestigt, dass diese Komponenten nicht zerstörungsfrei voneinander getrennt werden können.

Durch das flexible Verbindungsmittel ergeben sich für den Fahrzeugbenutzer verbesserte Verbindungsmöglichkeiten zwischen Modul und Elektrofahrzeug. So können bspw. Fahrräder beabstandet an einer Ladestation abgestellt und mit dieser verbunden und verriegelt werden. Auch ist es bspw. möglich, Module mit dem Fahrzeug zu Verbinden und zu Verriegeln, wobei die Module jedoch flexibel, z.B. am Lenker des Fahrzeuges, positioniert werden können. Ferner kann das Fahrzeug bspw. mit dem Verbindungsmittel besonders einfach an einem Gegenstand wie bspw. einem Fahrradständer angeschlossen und zusätzlich mit dem Modul verbunden werden.

Besonders bevorzugt ist eine Ausführungsform, bei dem am Fahrzeug eine zusätzliche Aufnahme mit einem Verriegelungsmittel für die Schnittstelle vorhanden ist, so dass das flexible Verbindungsmittel mit der Schnittstelle in die Aufnahme eingesteckt und verriegelt werden kann. Hierdurch ist eine Verwendung der Schnittstelle mit dem flexiblen Verbindungsmittel auch als "Kabelschloss" möglich, wenn gerade kein Modul mit dem Fahrzeug verbunden ist.

Nach einer weiter bevorzugten Ausführungsform ist eine magnetische Fixierung vorgesehen, um die Schnittstelle und das Anschlusselement aneinander zu fixieren und locker zu positionieren. Die magnetische Fixierung kann sowohl am Anschlusselement und/oder an der Schnittstelle angeordnet sein. Sie erlaubt eine genaue Positionierung der Schnittstelle und des Anschlusselements zueinander, um eine störungsfreie und exakte Verriegelung zu ermöglichen. Ferner bleibt hierdurch auch nach erfolgter Entriegelung das Anschlusselement an der Schnittstelle, so dass dieses, bspw. bei einer Ausbildung mit einem flexiblen Verbindungsmittel, nicht unkontrolliert seine Position verlässt und unbeabsichtigt beschädigt wird.

Zweckmäßig ist das Elektrofahrzeug zur Verbindung von zwei oder mehr Modulen ausgebildet. Insbesondere hier ergeben sich durch die Kompatibilitätsprüfung deutliche Vorteile. Naturgemäß sollte das Elektrofahrzeug bevorzugt zwei oder mehr Schnittstellen aufweisen.

Die Schalteinheit kann in diesem Fall zum separaten Verbinden der zwei oder mehr Module mit dem Leistungsbordnetz ausgebildet sein, so dass im Falle einer Inkompatibilität das entsprechende Modul zwar nicht mit dem Leistungsbordnetz verbunden wird, jedoch eine Verbindung der weiteren Module möglich ist.

Alternativ oder ergänzend kann die Steuerungseinheit im Falle der Verbindung von zwei oder mehr Modulen zweckmäßig eine Prioritätssteuerung aufweisen, um zusätzlich zu der Kompatibilitätsprüfung anhand der Priorität zu ermitteln, ob das jeweilige Modul mit dem Leistungsbordnetz verbunden werden kann. Hierzu kann die Steuerungseinheit bevorzugt ausgebildet sein, um das Identifikationssignal mit einem oder mehreren Prioritätsparametern zu vergleichen, so dass das Aktivierungssignal nur dann an die Schalteinheit bzw. den Verriegelungsantrieb gesendet wird, wenn das Identifikationssignal mit dem mindestens einen Prioritätsparameter übereinstimmt.

Bspw. ist es denkbar im Falle der Verbindung von mehreren Batteriemodulen eine Priorisierung anhand des derzeitigen Leistungsbedarfs der elektrischen Antriebseinheit vorzunehmen. Ebenfalls ist es möglich, eine Priorisierung anhand des Modultyps vorzusehen, so dass bspw. zunächst die Energie eines Solarpaneels zum Antrieb eingesetzt wird und ein Batteriemodul nur dann zugeschaltet wird, wenn das Solarpaneel keine ausreichende elektrische Leistung liefert. Naturgemäß kann auch ein nicht zugeschaltetes Modul trotzdem am Fahrzeug verriegelt bleiben.

Ferner kann das Elektrofahrzeug ein vom Leistungsbordnetz getrenntes Kommunikationsnetz aufweisen, welches die Steuerungseinrichtung mit der mindestens einen Schnittstelle verbindet. Das Kommunikationsnetz dient hierbei der Übermittlung mindestens des Identifikationssignals von der Modulsteuerung, nachdem das Modul mit der Schnittstelle des Fahrzeugs verbunden wurde. Naturgemäß kann das Kommunikationsnetz zur Verbindung weiterer Baugruppen des Fahrzeugs bzw. des Moduls ausgebildet sein, wie bspw. des Verriegelungsantriebs, der Schalteinheit, einer Instrumententafel, einer Bedieneinrichtung und/oder einer Motorsteuerung. Das Kommunikationsnetz kann hierbei bspw. elektrische Signalleitungen und/oder drahtlose Kommunikationsstrecken aufweisen; zweckmäßig ist das Kommunikationsnetz ein optisches Netz, d. h. ein entsprechend mit optischen Signalleitungen und Sender-/Empfängeranordnungen ausgebildetes Übertragungsnetzwerk. In diesem Fall weisen Schnittstelle und Anschlusselement optische Sender-/Empängeranordnungen auf, welche mindestens mit der jeweiligen NFC-Einrichtung verbunden sind. Bevorzugt ist das Kommunikationsnetz als Bussystem mit einem geeigneten Protokoll ausgebildet, insbesondere bevorzugt ist das Kommunikationsnetz ein CAN-Bussystem (CAN high, CAN low). Besonders bevorzugt sind Steuerungseinheit und Modulsteuerung zur Kommunikation über das CAN-open Protokoll ausgebildet. Die NFC-Einrichtungen sind hierbei zur Konvertierung des CAN (high/low) Signals in ein für die Nahbereichskommunikation geeignetes Protokoll, und entsprechend wiederum empfängerseitig in ein CAN (high/low) Signal, ausgebildet. Geeignete Protokolle für die Nahbereichskommunikation sind eingangs diskutiert.

Gemäß eines weiteren Aspekts der vorliegenden Erfindung ist ein Verfahren zum Verbinden eines Elektrofahrzeuges mit einem Modul.

Hierbei weist das Elektrofahrzeug ein Leistungsbordnetz zur Energieversorgung einer elektrischen Antriebseinheit des Elektrofahrzeugs, eine mit dem Leistungsbordnetz verbundene Schnittstelle zur Verbindung mit einem Modul, und eine Steuerungseinrichtung zur Kommunikation mit dem Modul auf.

Das Modul weist eine elektrische Anordnung zur Verbindung mit dem Leistungsbordnetz des Elektrofahrzeugs, ein mit der Schnittstelle des Elektrofahrzeugs trennbar verbindbares Anschlusselement, und eine Modulsteuerung zur Kommunikation mit der Steuerungseinrichtung des Elektrofahrzeugs auf.

Gemäß des vorliegenden Aspekts sind Schnittstelle und Anschlusselement zur drahtlosen Nahbereichskommunikation miteinander ausgebildet, so dass nach dem Verbinden von Schnittstelle und Anschlusselement die Modulsteuerung und die Steuerungseinrichtung des Elektrofahrzeugs über die Schnittstelle und das Anschlusselement drahtlos miteinander kommunizieren.

Bei dem Verfahren nach dem vorliegenden Aspekt kann insbesondere beim Verbinden des Anschlusselements mit der Schnittstelle ein Identifikationssignal an die Steuerungseinrichtung gesendet werden und das Identifikationssignal mittels der Steuerungseinrichtung empfangen werden, mit mindestens einem Kompatibilitätsparameter verglichen werden und bei Übereinstimmung des Identifikationssignals mit dem Kompatibilitätsparameter ein nachfolgender Verfahrensschritt durchgeführt werden, z.B. das vorstehend beschriebene Verriegeln und/oder Schalten. Bei dem Verfahren kann insbesondere das erste und/oder das zweite Verriegelungsmittel von einer freien Position in eine Verriegelungsposition gebracht werden, um das Anschlusselement an der Schnittstelle zu verriegeln.

Hinsichtlich der Ausbildung der einzelnen Komponenten und etwaiger Ausführungsformen wird auf die vorstehende Beschreibung des modularen Fahrzeugsystems Bezug genommen.

Die zuvor erläuterte Nahbereichskommunikation zwischen einem Elektrofahrzeug und einem Modul kann auch im Rahmen eines modularen Ladesystems vorteilhaft eingesetzt werden. Ein weiterer Aspekt der vorliegenden Erfindung betrifft daher ein modulares Ladesystem mit einer Ladeeinheit und mindestens einem Modul.

Die Ladeeinheit weist eine Ladeleitung und eine oder mehrere mit der Ladeleitung verbundene Schnittstellen zur Verbindung mindestens eines aufladbaren Moduls auf. Ferner ist eine Steuerungseinrichtung zur Kommunikation mit dem Modul vorgesehen.

Das mindestens eine aufladbare Modul kann ein mit der Schnittstelle trennbar verbindbares Anschlusselement und eine elektrische Anordnung zur Verbindung mit der Ladeleitung aufweisen. Das Modul kann ferner eine Modulsteuerung zur Kommunikation mit der Steuerungseinrichtung aufweisen.

Hierbei kann die Schnittstelle der Ladeeinheit trennbar mit dem Anschlusselement des Moduls verbindbar sein, um die elektrische Anordnung des Moduls mit der Ladeleitung zu verbinden. Ferner kann die Schnittstelle eine erste NFC-Einrichtung und das Anschlusselement eine zweite NFC-Einrichtung aufweisen, welche zur Nahbereichskommunikation miteinander ausgebildet sind, um die Steuerungseinrichtung der Ladeeinheit mit der Modulsteuerung (zur Datenkommunikation) zu verbinden.

Die Ausgestaltung gemäß dem vorliegenden Aspekt erlaubt daher auch bei der Verbindung eines aufladbaren Moduls mit einer Ladeeinheit eine vorteilhaft erhöhte Betriebssicherheit durch die erfindungsgemäße Nahfeldkommunikation.

Die elektrische Anordnung weist bevorzugt einen elektrischen Energiespeicher und insbesondere bevorzugt eine Batterieanordnung auf, wie bspw. einen oder mehrere Akkumulatoren. Zweckmäßig ist das aufladbare Modul daher ein Batteriemodul.

Die Ladeeinheit ist bevorzugt zur Verbindung mit einem Versorgungsnetz ausgelegt, bspw. einem 220v oder 110V Stromversorgungsnetz. Zweckmäßig weist die Ladeeinheit ein Netzteil auf, welches das Versorgungsnetz mit der Ladeleitung verbindet und für eine Anpassung und ggf. Überwachung von Strom und/oder Spannung ausgelegt ist. Die Ladeleitung kann hierbei ferner entsprechend dem vorstehend beschriebenen Leistungsbordnetz ggf. mit mehreren Spannungsebenen (60V, 120V, 180V) und entsprechenden separaten Leitern hierfür ausgebildet sein.

Hinsichtlich der Ausbildung der einzelnen Komponenten der Ladeeinheit und des aufladbaren Moduls wird auf die vorstehende Beschreibung des modularen Fahrzeugsystems Bezug genommen, wobei die Ausbildung der Komponenten der Ladeeinheit der entsprechenden Komponenten des Fahrzeugs entspricht.

Die Erfindung wird nachstehend anhand von Ausführungsbeispielen beschrieben. Es zeigt:
Fig. 1 ein Ausführungsbeispiel eines elektrischen Systems eines Elektrofahrzeugs in einer schematischen Ansicht;
Fig. 2 ein Ausführungsbeispiel eines Moduls in einer schematischen Ansicht;
Fig. 3 eine Detailansicht eines Anschlusselements des Moduls gemäß Fig. 2;
Fig. 4 das Ausführungsbeispiel des elektrischen Systems gemäß Fig. 1 mit einem verbundenen Modul gemäß Fig. 2,
Fig. 5 ein Ausführungsbeispiel der Kommunikation beim Verbinden eines Moduls mit einem Elektrofahrzeug in einem schematischen Flussdiagramm,
Fig. 6 eine beispielhafte Ausführungsform eines Anschlusselements und einer Schnittstelle in einer perspektivischen Ansicht mit einem schematischen Schaltschema,
Fig. 7 eine beispielhafte Ausführungsform der Schnittstelle gemäß Fig. 6 in einer teilweise geschnittenen perspektivischen Ansicht mit einem schematischen Schaltschema, und
Fig. 8 das Anschlusselement der Fig. 6 in einer perspektivischen Explosionsansicht.

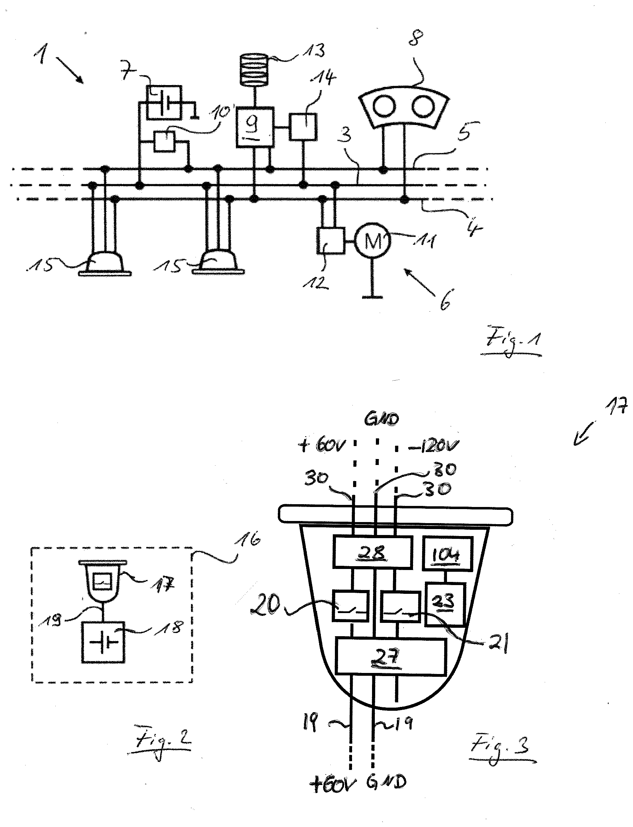

Figur 1 zeigt ein elektrisches System 1 eines Fahrzeugs 2 nach der Erfindung mit insgesamt drei Bordnetzsystemen, nämlich einem Leistungsbordnetz 3, einem CAN-Bussystem 4 und einem Hilfsbordnetz 5. Das Leistungsbordnetz 3 dient hierbei vorwiegend der elektrischen Energieversorgung einer elektrischen Antriebseinheit 6 des Fahrzeugs 2. Das Leistungsbordnetz 3 ist als Gleichstromnetz mit mehreren Spannungsebenen, nämlich +60 V DC sowie -120V DC Spitzenspannung und +48V DC bzw. -96V Nominalspannung für einen Strom von ca. 20 A - 100 A ausgelegt. Es wird von einer internen, wiederaufladbaren Fahrzeugbatterie 7 mit elektrischer Energie versorgt. Im Nachfolgenden werden die einzelnen Spannungsebenen des Leistungsbordnetzes 3 in Bezug auf die eingangs erwähnte Spitzenspannung bezeichnet, auch wenn die Nominalspannung hiervon abweicht.

Das Hilfsbordnetz 5 ist für eine Betriebsspannung von +12 V Gleichstrom ausgelegt und dient der Energieversorgung weiterer Fahrzeugkomponenten, wie bspw. einer Bedieneinheit 8 und einer Steuerungseinrichtung 9. Hierbei wird das Hilfsbordnetz 5 über die Batterie 7 und einen zwischengeschalteten 60V/12V Konverter 10 mit elektrischer Energie versorgt.

Das CAN-Bussystem 4 dient der Steuerung und der Kommunikation der Fahrzeugkomponenten, wie nachfolgend detailliert erläutert. Das CAN-Bussystem 4 ist vorliegend mit elektrischen Signalleitungen ausgebildet; das Kommunikationsprotokoll entspricht dem "CAN-open"-Protokoll gemäß Spezifikation CiA 454 (LEV).

Gemäß des vorliegenden Ausführungsbeispiels weist das Leistungsbordnetz 3 somit drei Leiter auf, nämlich +60V DC, -120V DC und Masse. Das Hilfsbordnetz 5 weist insgesamt zwei Leiter auf, nämlich +12V DC und Masse, während das CAN-Bussystem 4 CAN-high und CAN-low Leiter aufweist. Zur besseren Übersicht sind die einzelnen Leiter der vorstehend diskutierten Netze in den Figuren 1 und 2 nicht gezeigt.

Die elektrische Antriebseinheit 6 umfasst einen Elektromotor 11, welcher über eine Motorsteuerung 12 mit dem Leistungsbordnetz 3 verbunden ist. Die Motorsteuerung 12 ist zum Empfang von Steuerungsbefehlen ferner mit dem CAN-Bus 4 verbunden und moduliert die dem Motor zugeführte Spannung aus dem Leistungsbordnetz 3 mittels einer Pulsweitenmodulation (PWM), um eine Regelung der Antriebsleistung zu ermöglichen.

Zur Steuerung des Elektrofahrzeugs ist die bereits erwähnte zentrale Steuerungseinrichtung 9 vorgesehen, die entsprechend mit dem CAN-Bus 4 und zur Spannungsversorgung ferner mit dem Hilfsbordnetz 5 verbunden ist. Die Steuerungseinrichtung 9 ist eine Mikroprozessorsteuerung, welche über ein in einer verbundenen und variablen Speichereinheit 13 abgelegtes Programm gesteuert wird. Hierbei dient die Steuerungseinheit 9 bspw. dazu, die Motorsteuerung 12 für den Fahrbetrieb entsprechend eines über die Bedieneinheit 8 eingegebenen Steuerungsbefehls des Fahrzeugbenutzers anzusteuern.

Die Steuerungseinheit 9 überwacht ferner das Leistungsbordnetz 3 und ist hierzu mit einer Messeinheit 14 verbunden, welche Spannung und Strom auf dem Leistungsbordnetz erfasst und entsprechende digitale Messwerte an die Steuerungseinrichtung 9 liefert. Die Speichereinheit 13 weist Kompatibilitätsparameter in einer Datenbank auf, was nachfolgend im Detail erläutert ist.

Das elektrische System 1 des Elektrofahrzeuges 2 weist ferner zwei Schnittstellen 15 auf, die als Steckverbinder zur Verbindung mit entsprechenden Modulen 16 ausgebildet sind und das Leistungsbordnetz 3, das Hilfsbordnetz 5 und das Kommunikationsnetz 4 entsprechend mit an den Schnittstellen 15 angeschlossenen Modulen 16 trennbar verbindet. Das elektrische System 1 des Elektrofahrzeugs 2 und insbesondere die Bordnetze 3, 4 und 5 können naturgemäß weitere Baugruppen und Komponenten aufweisen bzw. verbinden, wie durch die gestrichelten Linien angedeutet.

Ein Ausführungsbeispiel eines zur Verbindung mit einer Schnittstelle 15 vorgesehenen Moduls 16 ist in einer schematischen Ansicht in Fig. 2 gezeigt. Das Modul 16 weist ein Anschlusselement 17 auf, welches vorliegend als Buchse zum Eingriff mit einer der Schnittstellen 15 ausgebildet ist. Das Modul 16 weist ferner eine elektrische Anordnung, nämlich eine 60V-Batterie 18 auf, welche zur Zufuhr von elektrischer Energie in das Leistungsbordnetz 3 über eine Versorgungsleitung 19 mit dem Anschlusselement 17 verbunden ist. Alternativ kann das Modul 16 insbesondere als Ladesäule oder Ladegerät ausgebildet sein.

Schnittstelle 15 und Anschlusselement 17 können mechanisch aufeinander angepasst ausgebildet sein. Insbesondere kann das Anschlusselement 17 einen elektromotorisch angetriebenen Riegel (in Fig. 2 nicht gezeigt) aufweisen, der in einen in der Schnittstelle 15 angeordneten Bügel (in Fig. 2 nicht gezeigt) zur Verriegelung eingreift.

Eine schematische Ansicht des Anschlusselements 17 in Fig. 3 gezeigt. Wie sich Fig. 3 entnehmen lässt, weist das Anschlusselement 17 insgesamt drei Kontaktelemente 30 auf, um das Modul 16 galvanisch mit dem Leistungsbordnetz 3 (+60V, -120V, GND) zu verbinden.

Das Anschlusselement 17 ist integriert mit einer ersten Schalteinheit 20 ausgebildet, mit der die Verbindung zwischen der +60V Versorgungsleitung 19 und folglich der Batterie 18 mit dem Leistungsbordnetz 3 geschaltet werden kann. Eine zweite Schalteinheit 21 ist vorgesehen, um die -120V Leitung des Leistungsbordnetzes 3 schaltbar mit dem Modul 16 zu verbinden. Wie gezeigt, ist diese Verbindung bei dem vorliegenden "Batteriemodul" 16 mit der 60V-Batterie 18 nicht genutzt, allerdings kann diese im Falle eines "Lademoduls" mit einem entsprechenden Netzteil bspw. zum Schnellladen der Fahrzeugbatterie 7 eingesetzt werden. Die Masseleitung (GND) ist nicht geschaltet.

Die Schalteinheiten 20 und 21 sind vorliegend mit MOSFET-Schaltern ausgebildet und werden über eine Mikroprozessor-Modulsteuerung 23 gesteuert, die mit dem CAN-Bussystem 4 über eine drahtlose Nahfeldverbindung verbunden ist. Hierzu ist modulseitig eine zweite NFC-Einrichtung 104 vorgesehen, welche mit einer fahrzeugseitigen ersten NFC-Einrichtung 43 (in Fig. 3 nicht gezeigt) über eine Nahfeldverbindung gemäß ISO 14443 bei 13,56 MHz in Kontakt steht.

Die fahrzeugseitige NFC-Einrichtung 43 ist mit der Schnittstelle 15 integriert ausgeführt, wie im Nachfolgenden noch im Detail erläutert. Die NFC-Einrichtungen 43, 104 dienen ferner zur Übertragung von Energie, nämlich zur Verbindung des Hilfsbordnetzes 5 mit dem Modul 16 bzw. einem modulseitigen Hilfsmodulnetz (nicht gezeigt in Fig. 3) und zur Energieversorgung der Modulsteuerung 23 und eines Elektromotors 114 (ebenfalls in Fig. 3 nicht gezeigt) mit ca. 20W.

Die Schnittstelle 15 und das Anschlusselement 17 sorgen somit für eine galvanische (leitfähige) Verbindung des Moduls 16 mit dem Leistungsbordnetz 3, während das CAN-Bussystem 4 und das Hilfsbordnetz 5 vom Modul 16 und der Modulsteuerung 23 galvanisch getrennt sind.

Ein Messfühler 27 ist vorgesehen, um die Spannung auf der Versorgungsleitung 19 und somit die durch die Batterie 18 bereitgestellte Spannung zu messen und einen entsprechenden Messwert an die Modulsteuerung 23 zu liefern.

Ferner ist eine Überwachungseinheit 28 vorgesehen, welche den maximal zulässigen Strom zwischen Modul 16 und Leistungsbordnetz 3 sowie die maximal zulässigen Spannungen überwacht, so dass bspw. im Falle eines Kurzschlusses die Batterie 18 sicher vom elektrischen System 1 des Fahrzeugs 2 getrennt werden kann. Hierzu übermittelt die Überwachungseinheit 28 regelmäßig entsprechende Messwerte an die Modulsteuerung 23, welche entsprechend die Schalteinheiten 20 und 21 betätigt.

Im vorliegenden Beispiel sollte ein Strom von 100 A zwischen Versorgungsleitung 19 und Leistungsbordnetz 3 nicht überschritten werden.

Die Überwachungseinheit 28, die Schalteinheiten 20, 21 und der Messfühler 27 sind naturgemäß mit der Modulsteuerung 23 über geeignete Kommunikationsleitungen verbunden (nicht gezeigt) und ggf. mit dieser in einer Elektronikeinheit integriert ausgeführt.

Zusätzlich ist ein Elektromotor 114 (nicht in Fig. 3 gezeigt) vorgesehen, der den zuvor beschriebenen Riegel (ebenfalls nicht gezeigt) antreibt. Der Elektromotor 114 wird von der Modulsteuerung 23 angesteuert und über die NFC-Einrichtung 104 mit elektrischer Energie versorgt, wie eingangs erwähnt.

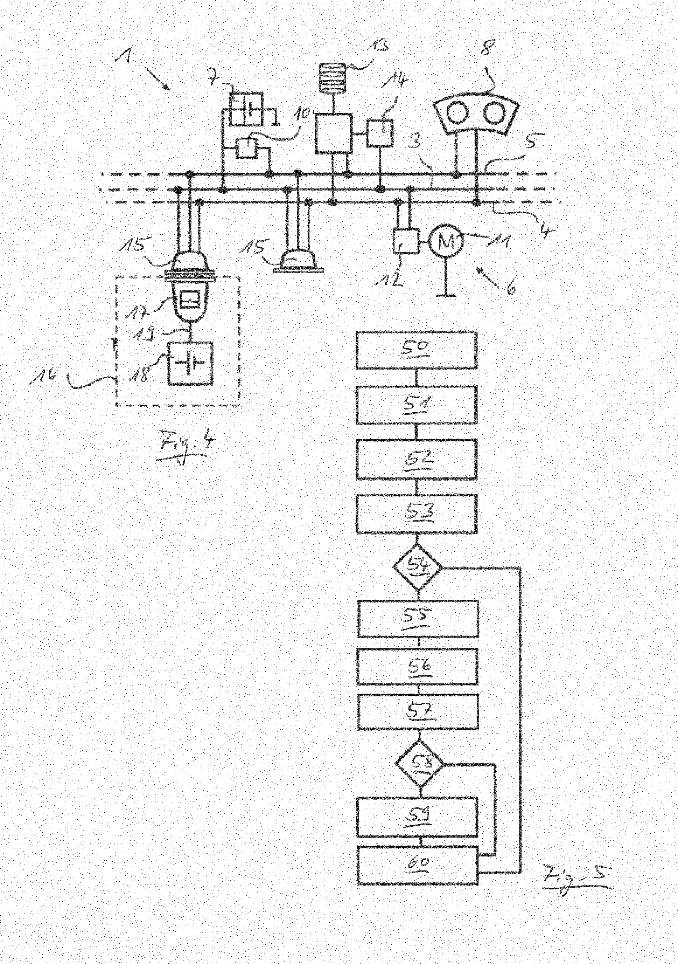

Ein Ausführungsbeispiel des elektrischen Systems 1 des modularen Fahrzeugs 2 mit verbundenem Modul 16 ist in Fig. 4 gezeigt. Der Anschluss einer zusätzlichen Batterie 18 kann bspw. dann notwendig werden, wenn die interne Fahrzeugbatterie 7 erschöpft ist oder die Reichweite des Fahrzeugs erhöht werden soll. Der Benutzer schließt hierzu das Modul 16 an die Schnittstelle 15 an, wonach Steuerungseinrichtung 9 und Modulsteuerung 23 in einem Kompatibilitätsmodus miteinander über den CAN-Bus 4 und die beiden NFC-Einrichtungen 43, 104 kommunizieren, um zum einen die Berechtigung für den Anschluss des Moduls 16 zu prüfen und zum Anderen die Kompatibilität des Moduls 16 und genauer der Batterie 18 des Moduls 16 vor einer Verbindung und einem Verriegeln dieser mit dem Leistungsbordnetz 3 zu prüfen.

Das Verfahren beim Verbinden des Moduls 16 mit der Schnittstelle 15 wird nachfolgend mit Bezug auf das Ausführungsbeispiel gemäß Fig. 5 erläutert, welches die einzelnen Schritte anhand eines Flussdiagramms darstellt.

Gemäß Schritt 50 wird zunächst das Anschlusselement 17 des Moduls 16 mit einer der Schnittstellen 15 durch einen Benutzer verbunden. Die Schalteinheiten 20 und 21 sind in diesem Zustand zunächst geöffnet, so dass die Batterie 18 nicht mit dem Leistungsbordnetz 3 verbunden ist. Allerdings sorgt das Anschlusselement 17 für eine Verbindung der Überwachungseinheit 28 mit dem Leistungsbordnetz 3.

Sobald die Überwachungseinheit 28 eine Spannung auf dem Leistungsbordnetz 3 feststellt, gibt diese ein Signal an die Modulsteuerung 23, welche in Schritt 51 den Messfühler 27 hinsichtlich der derzeitigen Batteriespannung auf der Versorgungsleitung 19 abfragt. Ferner ermittelt die Modulsteuerung 23 parallel aus einem internen Speicher mehrere Identifikationsparameter, welche das Modul 16 hinsichtlich Typ und Hersteller charakterisieren. In Schritt 52 sendet die Modulsteuerung 23 ein Identifikationssignal an die Steuerungseinrichtung 9 über die beiden NFC-Einrichtungen 43, 104 und entsprechend das CAN-Bussystem 4. Das Identifikationssignal enthält im vorliegenden Beispiel die nachfolgende Information:

| | |
|---|---|
| Hersteller-ID: | 005 |
| Typen-ID: | 125 |
| Batterie-Spannung: | 49,5 V |

Hierbei entspricht die Hersteller-ID einem bestimmten, entsprechend der ID zugeordneten Hersteller des Moduls. Die Typen-ID entspricht der Funktionalität "Energiequelle - Batterie".

Die Steuerungseinrichtung 9 empfängt das Identifikationssignal in Schritt 53 und fragt die Kompatibilitätsparameter des Fahrzeugs aus der in der Speichereinheit 13 abgelegten Datenbank ab. Im vorliegenden Beispiel umfasst die Datenbank die folgenden Parameter:

| | |
|---|---|
| Erlaubte Hersteller: | 002-008, 057, 062, 118-255 |
| Erlaubte Modultypen: | 014-042,48,87,125, 144 |
| max. Spannung Leistungsbordnetz (untere Spannungsebene): | 60,0 V |
| min. Spannung Leistungsbordnetz (untere Spannungsebene): | 30,0 V |

Die Steuerungseinrichtung 9 vergleicht in Schritt 54 zunächst die im Identifikationssignal erhaltenen Parameter mit dem aus der Datenbank erhaltenen Kompatibilitätsparameter. Wie aus den vorstehenden Tabellen folgt, ist das Modul 16 grundsätzlich mit dem Fahrzeug kompatibel und zum Anschluss berechtigt. Die Steuerungseinrichtung 9 sendet gemäß Schritt 55 ein Aktivierungssignal an die Modulsteuerung 23, welche den Elektromotor 114 des Riegels in Schritt 56 ansteuert und das Modul 16 an dem Fahrzeug verriegelt. Entsprechend fragt die Steuerungseinrichtung 9 in Schnitt 57 anschließend die Messeinheit 14 hinsichtlich der aktuellen Spannung des Leistungsbordnetzes 3 ab.

Die Abfrage der Messeinheit 14 in Schritt 57 ist erforderlich, da das Fahrzeug auch eine interne Fahrzeugbatterie 7 aufweist und die Spannung der Batterie 7 sich daher nur unwesentlich von der Spannung der Batterie 18 unterscheiden sollte. Im vorliegenden Beispiel beträgt die Spannung auf dem Leistungsbordnetz 3 49,5 V.

Die Steuerungseinrichtung 9 vergleicht diesen Wert mit der Batterie-Spannung aus dem Identifikationssignal in Schritt 58 und prüft, ob die Batterie-Spannung des Moduls 16 um nicht mehr als ± 0,05 V von der Spannung des Leistungsbordnetzes 3 abweicht.

Da dies im vorliegenden Beispiel der Fall ist, sendet die Steuerungseinrichtung 9 in Schritt 59 ein zweites Aktivierungssignal an die mit der Modulsteuerung 23 verbundenen Schalteinheiten 20 und 21, worauf die Versorgungsleitung 19 und somit die Batterie 18 mit dem Leistungsbordnetz 3 verbunden wird. Die Kompatibilitätsprüfung bzw. der "Kompatibilitätsmodus" endet in Schritt 60.

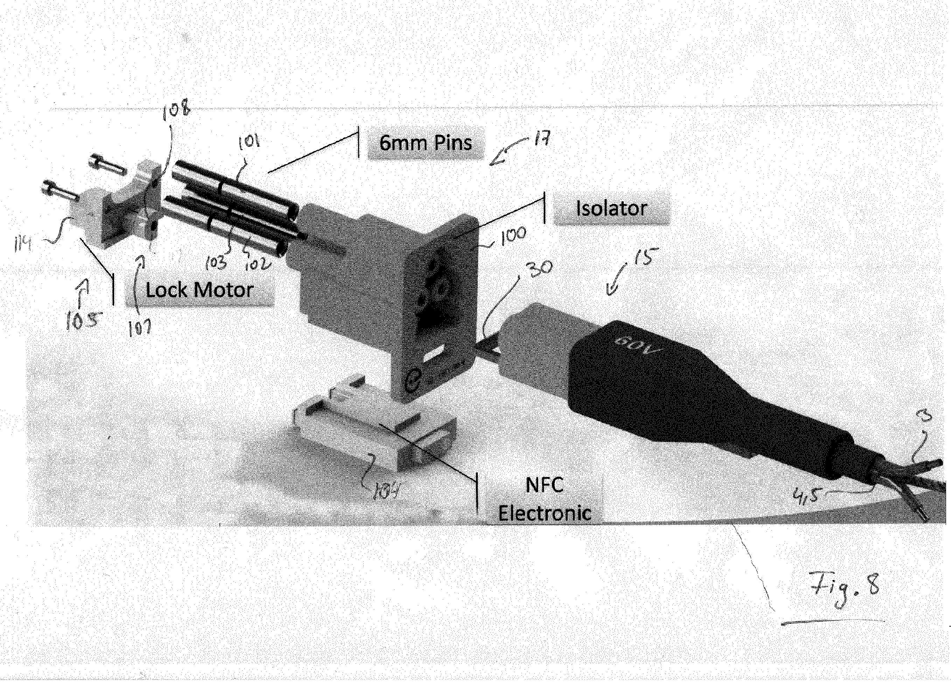

Die erfolgreiche Verbindung wird dem Benutzer durch eine grüne Indikatorlampe (siehe Fig. 8), wie bspw. einer LED angezeigt, die im Anschlusselement 17 angeordnet ist. Andernfalls zeigt eine rote Indikatorlampe (siehe Fig. 8) im Anschlusselement 17, dass eine Verbindung des Moduls 16 mit dem Fahrzeug aufgrund mangelnder Kompatibilität nicht möglich ist. In diesem Falle wird der Elektromotor 114 des Riegels (beides nicht gezeigt) nochmals betätigt, um Modul 16 von der Schnittstelle 15 zu entriegeln.

Während des Betriebs bleibt die Überwachungseinheit 28 aktiv. Sollten die vorgegebenen Maximalwerte für Strom bzw. Spannung überschritten werden, sendet die Überwachungseinheit 28 ein Signal an die Modulsteuerung 23, so dass die Schalteinheit 20 die Verbindung zwischen Batterie 18 und elektrischem System 1 des Fahrzeugs trennt, um Beschädigungen zu vermeiden.

Naturgemäß ist die vorliegende Erfindung nicht auf Anwendungsfälle beschränkt, bei welchen ein Modul 16 mit dem Fahrzeug 2 verbunden wird. Auch die Verbindung eines ersten Moduls, bspw. einer Ladestation bzw. Ladeeinheit und eines zweiten Moduls bspw. eines wiederaufladbaren Moduls mit Akku ist denkbar.

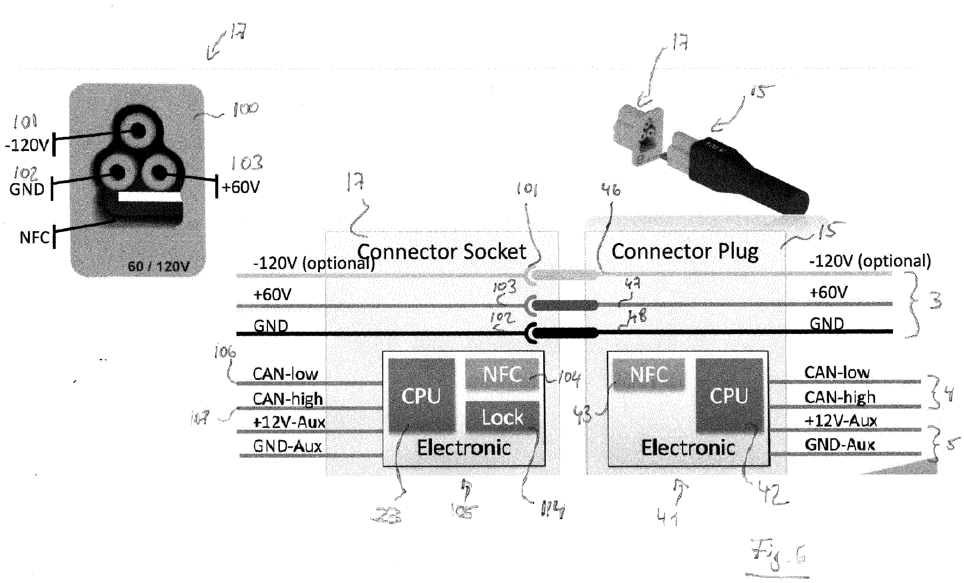

Figur 6 zeigt ein weiteres Ausführungsbeispiel einer fahrzeugseitigen Schnittstelle 15 zusammen mit einem entsprechenden modulseitigen Anschlusselement 17. Im vorliegenden Beispiel handelt es sich bei dem Modul 16 um ein Lademodul mit einem Netzanschluß (nicht gezeigt). Das Lademodul weist ein Netzteil auf (ebenfalls nicht gezeigt), welches mehrere Spannungen bereitstellt, nämlich -120V DC, +60V DC einerseits zur Verbindung mit dem Leistungsbordnetz 3, sowie +12V DC zur Verbindung mit dem Hilfsbordnetz 5. Die +12V DC Verbindung wird im Nachfolgenden auch als "Hilfsmodulnetz" (Module auxiliary power supply) bezeichnet.

Wie gezeigt, weist die Schnittstelle 15 drei Kontaktstifte 101, 102, 103 zur Verbindung zwischen Modul 16 und Leistungsbordnetz 3 auf, welche in einem als Isolator ausgebildetes Buchsengehäuse 100 angeordnet sind. Die bereits eingangs diskutierte NFC-Einrichtung 104 ist im unteren Bereich des Buchsengehäuses 100 verdeckt angeordnet, wie nachfolgend noch mit Bezug zu Figur 8 detailliert erläutert.

Wie das im unteren Bereich der Fig. 6 aufgeführte schematische Schaltbild zeigt, verbinden die Kontaktstifte 101, 102, 103 über entsprechende Steckkontakte 46, 47, 48 der fahrzeugseitigen Schnittstelle 15 das Modul 16 mit dem Leistungsbordnetz 3 des Fahrzeugs 1, wenn Stecker 15 und Buchse 17 miteinander verbunden sind. Diese Verbindung zwischen Schnittstelle 15 und Anschlusselement 17 ist elektrisch leitend, also galvanisch. Wie eingangs mit Bezug zum Ausführungsbeispiel der Fig. 3 diskutiert, ist die - 120V DC Verbindung optional entsprechend der jeweiligen Anwendung. Die Verbindung des CAN-Bussystems 4 und des Hilfsbordnetz 5 ist hingegen drahtlos und somit galvanisch vom Modul 16 getrennt. Hierdurch werden insbesondere Kontaktprobleme bei den auf diesen Netzen geringen Strömen vermieden.

Entsprechend des Ausführungsbeispiels der Fig. 3 weist das Anschlusselement 17 ferner die Modulsteuerung 23, die zweite NFC-Einrichtung 104 und den Elektromotor 114 der Verriegelung (nicht gezeigt) auf, welche eine Elektronikeinheit 105 bilden. Die NFC-Einrichtung 104 wird durch die Modulsteuerung 23 zur Kommunikation angesteuert. Der eingangs mit Bezug zu Fig. 3 diskutierte Messfühler 27, die Überwachungseinheit 28 sowie die Schalteinheiten 20 und 21 sind in den Figuren 6-8 zur verbesserten Übersicht nicht gezeigt, könnten jedoch ebenso Teil der Elektronikeinheit 105 bilden. Alternativ können diese Komponenten auch außerhalb des Anschlusselement 17 im Modul 16 angeordnet sein. Während die gezeigten modulseitigen -120V DC, +60V DC sowie +12V DC Leitungen mit dem eingangs diskutierten Netzteil (nicht gezeigt) verbunden sind, dienen die modulseitigen CAN-low 106 und CAN-high 107 Leitungen zur Verbindung des Fahrzeugs 2 mit einer zentralen Datenerfassungvorrichtung (nicht gezeigt), um den Ladevorgang abzurechnen oder Diagnose- bzw. Nutzungsinformationen zu sammeln. Die CAN-Busleitungen 106, 107 sind jedoch optional.

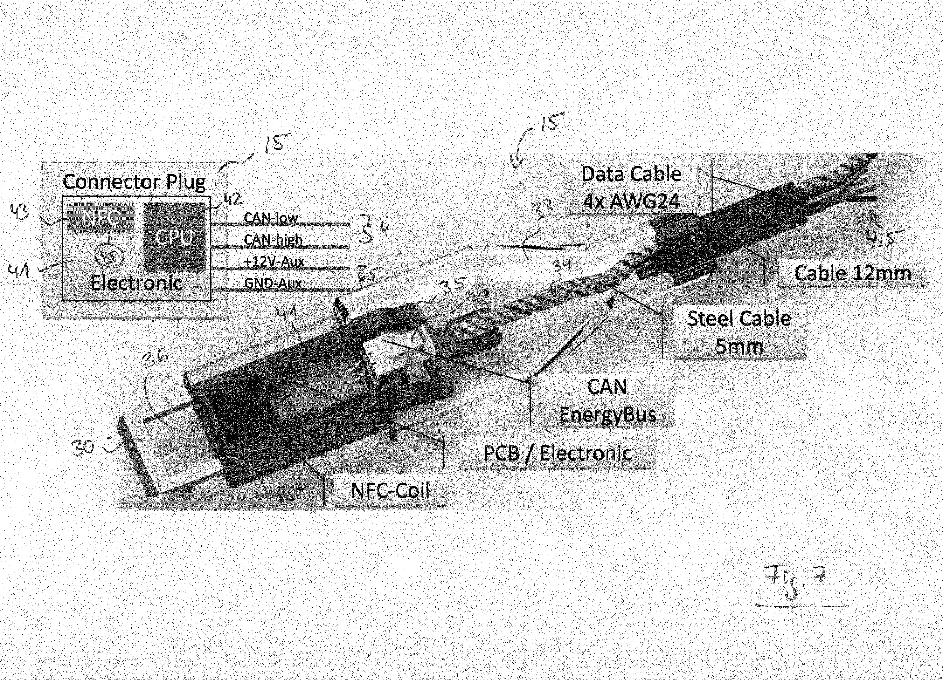

Eine teilweise geschnittene perspektivische Ansicht der Schnittstelle 15 mit einem schematischen Schaltschema ist in Figur 7 gezeigt. Zur verbesserten Übersicht sind die elektrischen Steckkontakte 46, 47, 48 der Schnittstelle 15 in Figur 7 nicht gezeigt.

Die in Fig. 7 gezeigte Schnittstelle 15 ist als verriegelbarer Stecker ausgebildet. Sie weist ein in der Figur zur besseren Darstellung durchsichtig dargestelltes Gehäuse 33 auf, in das ein flexibles Verbindungsmittel 34 zum Beispiel in Form eines vorzugsweise 5 mm starken Stahlseils mündet. Das Verbindungsmittel 34 ist an einem Verriegelungsmittel 35 festgelegt. Das Verriegelungsmittel 35 ist als geschlossen umlaufender Stahlbügel ausgebildet und ragt teilweise auf der dem Verbindungsmittel 34 gegenüber liegenden Seite der Schnittstelle 15 aus dem Gehäuse 33 vor, so dass außerhalb des Gehäuses 33 ein im Wesentlichen C-förmiger geschlossener Bügel 30 ausgebildet ist, der mit einer quer zur Steckerrichtung durchgehenden Öffnung 36 versehen ist.

Parallel zum Verbindungsmittel 34 verlaufen die Leitungen des CAN-Bussystems 4 und des Hilfsbordnetzes 5. Diese sind im Gehäuse 33 über einen Verbinder 46 mit einer weiteren Elektronikeinheit 41 verbunden, welches die erste NFC-Einrichtung 43 mit NFC-Spule 45 und einen Mikroprozessor 42 aufweist. Der Mikroprozessor 42 steuert hierbei die NFC-Einrichtung 43 und ggf. weitere in der Schnittstelle angeordnete Messeinheiten.

Die NFC-Spule 45 dient der drahtlosen Kommunikation sowie der Übertragung von elektrischer Energie und insbesondere zur Verbindung des Hilfsbordnetzes 5 mit dem Hilfsmodulnetz, d.h. mit mindestens dem Netzteil des Lademoduls. Die NFC-Spule 45 ist derart angeordnet, dass sich ihre Spulenachse quer zur Steckrichtung angeordnet ist.

Die hier nicht dargestellte Verbindung zum Leistungsbordnetz 3 kann naturgemäß in gleicher Weise parallel zum Verbindungsmittel 34 verlaufen.

Fig. 8 zeigt Details des zuvor erläuterten Anschlusselements 17 in einer Explosionsansicht, zusammen mit der zuvor erläuterten Schnittstelle 15. Wie bereits eingangs erwähnt, weist das Anschlusselement 17 ein Gehäuse 100, Kontaktstifte 101, 102, 103, zum Beispiel in Form von 6 mm Stiften, die zweite NFC-Einrichtung 104 sowie ein Verriegelungsmittel 105 auf.

Die NFC-Einrichtung 104 ist parallel zur Steckrichtung und damit bei eingesteckter Schnittstelle 15 parallel zur Elektronikeinheit 41 ausgerichtet. Sie weist eine in den Figuren nicht gezeigte NFC-Spule auf, deren Spulenachse im genannten Fall parallel zur Spulenachse der NFC-Spule 45 ausgerichtet ist und sich bestenfalls mit dieser überdeckt. Die an der Vorderseite der NFC-Einrichtung 104 angeordneten LEDs zeigen den jeweiligen Verbindungsstatus an, wie bereits eingangs diskutiert.

Die Kontaktstifte 101, 102, 103 sind in dem Gehäuse 100 aufgenommen und kontaktieren einerseits bei eingesteckter Schnittstelle 15 deren entsprechende Steckkontakte 46, 47, 48. Über die Kontaktstifte 101, 102, 103 und die zugehörigen Steckkontakte 46, 47, 48 erfolgt eine Übertragung von Energie vom/zum Leistungsbordnetz 3, bspw. zum Aufladen der Fahrzeugbatterie 7. Wie in Fig. 8 gezeigt, weisen die Leiter des Leistungsbordnetzes 3 naturgemäß einen größeren Querschnitt auf, als die Leiter des CAN-Bussystems 4 und des Hilfsbordnetzes 5.

Das Verriegelungsmittel 105 des Anschlusselements 17 weist ein mittels des Verriegelungsmotors 114 rotatorisch positionierbares Riegelelement 107 auf. Dieses ist zum Zusammenwirken mit dem Verriegelungsmittel 35 der Schnittstelle 15 ausgebildet und weist einen Riegelnocken 108 auf, der bei entsprechender Radialpositionierung in die im Verriegelungsmittel 35 ausgebildete Ausnehmung eingreift und die in das Anschlusselement 17 eingesteckte Schnittstelle 15 verriegelt.

Die zuvor erläuterten Ausführungsbeispiele erlauben zahlreiche Änderungen oder Ergänzungen. Beispielsweise ist es denkbar, dass
- die Steuerungseinheit 9 mit der Bedieneinheit 8 und/oder der Motorsteuerung 12 integriert ausgebildet ist,
- die Schalteinheiten 20, 21 fahrzeugseitig bzw. auf der Seite einer Ladeeinheit ausgebildet ist,
- die Schalteinheiten 20, 21 integriert mit der Schnittstelle 15 ausgebildet ist,
- die Schalteinheiten 20, 21 im Modul 16 angeordnet sind,
- nur eine oder mehr als zwei Schnittstellen 15 zur Verbindung mit entsprechenden Modulen 16 im elektrischen System 1 des Fahrzeugs bzw. in einer Ladeeinheit angeordnet sind,
- die interne Fahrzeugbatterie 7 über ein Anschlusselement 17 mit einer der Schnittstellen 15 trennbar verbunden ist,
- das CAN-Bussystem 4 ergänzend oder alternativ zu den gezeigten elektrischen Signalleitungen optische Signalleitungen und/oder drahtlose Signalstrecken umfasst,
- die Indikatorlampen bzw. LEDs anstelle in dem Anschlusselement 17 fahrzeugseitig bzw. in einer Ladeeinheit angeordnet sind,
- das Leistungsbordnetz 3 nur eine Spannungsebene aufweist,
- Schnittstelle 15 und Anschlusselement 17 mit mehr oder weniger als den gezeigten drei Kontakten 101, 102, 103, bzw. 46, 47, 48 ausgebildet sind,
- die Schalteinheit 20 zum getrennten Schalten einer Speiseleitung und einer Ladeleitung ausgebildet ist, die zwischen Modul 16 und Leistungsbordnetz 3 vorgesehen sind, und/oder
- das Modul 16 als passive Komponente, d.h. bspw. als Verlängerungs- oder Überbrückungskabel, ausgelegt ist, und neben einem Anschlusselement 17 einen weiteren Steckverbinder bzw. eine Schnittstelle 15 zum Verbinden mit einem weiteren Modul aufweist.

Die Verwendung des Begriffes "aufweisend" bzw. "aufweist" in den Ansprüchen und der vorliegenden Beschreibung schließt das Vorhandensein weiterer Merkmale nicht aus. Auch schließt die Verwendung von unbestimmten Artikeln eine Mehrzahl nicht aus. Die bloße Aufführung einzelner Merkmale in unterschiedlichen abhängigen Ansprüchen oder unterschiedlichen Ausführungsbeispielen deutet nicht darauf hin, dass eine Kombination dieser Merkmale nicht in einem vorteilhaften Ausführungsbeispiel erfindungsgemäß eingesetzt werden kann. Im Gegenteil sind eine Vielzahl von Kombinationen denkbar. Die Verwendung von Bezugszeichen ist nicht einschränkend auszulegen. Die Erfindung ist durch die Ansprüche definiert.

## Patentansprüche

1. Modulares Fahrzeugsystem mit einem Elektrofahrzeug (2) und einem mit dem Elektrofahrzeug (2) mittels einer Steckverbindung verbindbaren Modul (16),
wobei das Elektrofahrzeug (2) mindestens aufweist:
- ein Leistungsbordnetz (3) zur Energieversorgung einer elektrischen Antriebseinheit (6) des Elektrofahrzeugs (2),
- eine Fahrzeugbatterie (7),
- eine Steuerungseinrichtung (9) zur Kommunikation mit dem Modul (16), und
- eine mit dem Leistungsbordnetz (3) und der Steuerungseinrichtung (9) verbundene Schnittstelle (15) zur Verbindung mit dem Modul (16), welche Schnittstelle (15) ein erstes Element der Steckverbindung bildet,
wobei das Modul (16) mindestens aufweist:
- eine elektrische Anordnung,
- eine Modulsteuerung (23) zur Kommunikation mit der Steuerungseinrichtung (9) des Elektrofahrzeugs (2), und
- ein mit der elektrischen Anordnung und der Modulsteuerung (23) verbundenes Anschlusselement (17), das ein zweites Element der Steckverbindung bildet, wobei
- die Schnittstelle (15) des Elektrofahrzeugs (2) trennbar mit dem Anschlusselement (17) des Moduls (16) verbindbar ist, um die elektrische Anordnung des Moduls (16) mit dem Leistungsbordnetz (3) des Elektrofahrzeugs (2) zu verbinden,
- die Schnittstelle (15) eine erste NFC- Einrichtung (43) und das Anschlusselement (17) eine zweite NFC-Einrichtung (104) aufweist, welche zur bidirektionalen Nahbereichskommunikation miteinander ausgebildet sind, um die Steuerungseinrichtung (9) des Elektrofahrzeugs (2) mit der Modulsteuerung (23) zu verbinden,
- das Modul (16) ein Lademodul ist,
- die elektrische Anordnung des Moduls (16) eine Spannungsversorgung aufweist, welche mindestens zwei unterschiedliche Gleichspannungen zum Aufladen der Fahrzeugbatterie (7) bereitstellt, die mindestens eine erste und eine zweite Spannungsebene bilden,
- das Anschlusselement (17) ein erstes Kontaktelement zur Verbindung des Leistungsbordnetzes (3) mit der elektrischen Anordnung auf der ersten Spannungsebene aufweist, und wobei
- das Anschlusselement (17) mindestens ein zweites Kontaktelement zur Verbindung des Leistungsbordnetzes (3) mit der elektrischen Anordnung auf der zweiten Spannungsebene aufweist.

2. Modulares Fahrzeugsystem nach Anspruch 1, wobei die NFC-Einrichtungen (43, 104) zusätzlich zur Übertragung von Energie ausgebildet sind, insbesondere zur elektrischen Energieversorgung der Steuerungseinrichtung (9) des Elektrofahrzeugs (2) und/oder der Modulsteuerung (23).

3. Modulares Fahrzeugsystem nach Anspruch 2, wobei das Elektrofahrzeug (2) ferner ein Hilfsbordnetz (5) aufweist, das Modul (16) ein Hilfsmodulnetz aufweist und die NFC-Einrichtungen (43, 104) zur Übertragung von Energie zwischen Hilfsbordnetz (5) und Hilfsmodulnetz ausgebildet sind.

4. Modulares Fahrzeugsystem nach einem der vorangehenden Ansprüche, wobei die erste NFC-Einrichtung (43) und die zweite NFC-Einrichtung (104) jeweils eine NFC-Spule (45) aufweist, deren Spulenachse orthogonal zur Steckrichtung und bei bestimmungsgemäßer Verbindung von Schnittstelle (15) und Anschlusselement (17) zueinander parallel angeordnet sind.

5. Modulares Fahrzeugsystem nach Anspruch 4, wobei die erste NFC-Einrichtung (43) und die zweite NFC-Einrichtung (104) derart ausgebildet sind, dass sich ihre Spulenachsen bei bestimmungsgemäßer Verbindung der Steckverbindung im Wesentlichen vollständig überdecken.

6. Modulares Fahrzeugsystem nach einem der vorstehenden Ansprüche, wobei an der Schnittstelle (15) ein erstes Verriegelungsmittel (35) angeordnet ist und an dem Anschlusselement (17) ein zweites Verriegelungsmittel (105) angeordnet ist, das zum Eingriff mit dem ersten Verriegelungsmittel (35) ausgebildet ist.

7. Modulares Fahrzeugsystem nach Anspruch 6, wobei am ersten und/oder zweiten Verriegelungsmittel (35, 105) ein elektrisch betätigbarer Verriegelungsantrieb angeordnet ist, der dazu ausgelegt ist, mindestens eines der Verriegelungsmittel (35, 105) zwischen einer freien Position und einer Verriegelungsposition zu bewegen.

8. Modulares Fahrzeugsystem nach Anspruch 6 oder 7, wobei die Modulsteuerung (23) ausgebildet ist, beim Verbinden des Anschlusselements (17) mit der Schnittstelle (15) ein Identifikationssignal an die Steuerungseinrichtung (9) zu senden und die Steuerungseinrichtung (9) ausgebildet ist, das Identifikationssignal zu empfangen, mit mindestens einem Kompatibilitätsparameter zu vergleichen und bei Übereinstimmung des Identifikationssignals mit dem Kompatibilitätsparameter ein Aktivierungssignal an mindestens eine Schalteinheit (20, 21) zu senden, um die elektrische Anordnung mit dem Leistungsbordnetz (3) zu verbinden und ein Aktivierungssignal an den mindestens einen Verriegelungsantrieb zu senden, um das Anschlusselement (17) mit der Schnittstelle (15) zu verriegeln.

9. Modulares Fahrzeugsystem nach einem der vorstehenden Ansprüche, wobei Schnittstelle (15) und Anschlusselement (17) zur galvanischen Verbindung der elektrischen Anordnung des Moduls (16) mit dem Leistungsbordnetz (3) des Elektrofahrzeugs (2) auf mehreren Spannungsebenen ausgebildet sind.

10. Modulares Fahrzeugsystem nach einem der vorstehenden Ansprüche, wobei die erste NFC-Einrichtung (43) und/oder die zweite NFC-Einrichtung (104) eine NFC-Steuerung aufweist, die zur Kommunikation mit der Steuerungseinrichtung (9) bzw. der Modulsteuerung (23) ausgebildet ist.

11. Modulares Fahrzeugsystem nach Anspruch 10, wobei die NFC-Steuerung logisch adressierbar ist.

12. Modulares Fahrzeugsystem nach einem der vorangehenden Ansprüche, wobei zwischen der Schnittstelle (15) und dem Elektrofahrzeug (2) und/oder dem Anschlusselement (17) und dem Modul (16) ein flexibles Verbindungsmittel (34) angeordnet ist.

13. Elektrofahrzeug (2), das mit einem Modul (16) verbindbar ist, wobei das Elektrofahrzeug (2) mindestens aufweist:
- ein Leistungsbordnetz (3) zur Energieversorgung einer elektrischen Antriebseinheit (6) des Elektrofahrzeugs (2),
- eine Fahrzeugbatterie (7),
- eine Steuerungseinrichtung (9) zur Kommunikation mit dem verbindbaren Modul (16), und
- eine mit dem Leistungsbordnetz (3) verbundene Schnittstelle (15) zur trennbaren Verbindung mit dem verbindbaren Modul (16), wobei
- die Schnittstelle (15) eine NFC-Einrichtung (43) aufweist, die zur bidirektionalen Nahbereichskommunikation mit einer weiteren NFC-Einrichtung (104) des verbindbaren Moduls (16) ausgebildet ist,
- das verbindbare Modul (16) ein Lademodul ist und eine elektrische Anordnung mit einer Spannungsversorgung aufweist, welche mindestens zwei unterschiedliche Gleichspannungen zum Aufladen der Fahrzeugbatterie (7) bereitstellt, die mindestens eine erste und eine zweite Spannungsebene bilden,
- die Schnittstelle (15) ein erstes Kontaktelement zur Verbindung des Leistungsbordnetzes (3) mit der elektrischen Anordnung auf der ersten Spannungsebene aufweist, und wobei
- die Schnittstelle (15) mindestens ein zweites Kontaktelement zur Verbindung des Leistungsbordnetzes (3) mit der elektrischen Anordnung auf der zweiten Spannungsebene aufweist.

14. Modul (16) zur Verbindung mit einem Elektrofahrzeug (2) mit einem Leistungsbordnetz (3), wobei das Modul (16) aufweist:
- eine elektrische Anordnung,
- eine Modulsteuerung (23) zur Kommunikation mit einer Steuerungseinrichtung (9) des verbindbaren Elektrofahrzeugs (2) und
- ein mit der elektrischen Anordnung verbundenes Anschlusselement (17) zur trennbaren Verbindung mit einer Schnittstelle (15) des verbindbaren Elektrofahrzeugs (2), wobei
- das Anschlusselement (17) eine NFC-Einrichtung (104) aufweist, die zur bidirektionalen Nahbereichskommunikation mit einer weiteren NFC-Einrichtung (43) des verbindbaren Elektrofahrzeugs (2) ausgebildet ist,
- das Modul (16) ein Lademodul ist,
- die elektrische Anordnung des Moduls (16) eine Spannungsversorgung aufweist, welche mindestens zwei unterschiedliche Gleichspannungen zum Aufladen einer Fahrzeugbatterie (7) des verbindbaren Elektrofahrzeugs (2) bereitstellt, die mindestens eine erste und eine zweite Spannungsebene bilden,
- das Anschlusselement (17) ein erstes Kontaktelement zur Verbindung des Leistungsbordnetzes (3) mit der elektrischen Anordnung auf der ersten Spannungsebene aufweist, und wobei
- das Anschlusselement (17) mindestens ein zweites Kontaktelement zur Verbindung des Leistungsbordnetzes (3) mit der elektrischen Anordnung auf der zweiten Spannungsebene aufweist.

15. Verfahren zum Verbinden eines Elektrofahrzeuges (2) mit einem Modul (16), wobei das Elektrofahrzeug (2) ein Leistungsbordnetz (3) zur Energieversorgung einer elektrischen Antriebseinheit (6) des Elektrofahrzeugs (2), eine Fahrzeugbatterie (7), eine mit dem Leistungsbordnetz (3) verbundene Schnittstelle (15) zur Verbindung mit einem Modul (16), und eine Steuerungseinrichtung (9) zur Kommunikation mit dem Modul (16) aufweist und wobei das Modul (16) eine elektrische Anordnung zur Verbindung mit dem Leistungsbordnetz (3) des Elektrofahrzeugs (2), ein mit der Schnittstelle (15) des Elektrofahrzeugs (2) trennbar verbindbares Anschlusselement (17), und eine Modulsteuerung (23) zur Kommunikation mit der Steuerungseinrichtung (9) des Elektrofahrzeugs (2) aufweist, wobei
Schnittstelle (15) und Anschlusselement (17) zur drahtlosen Nahbereichskommunikation miteinander ausgebildet sind, so dass nach dem Verbinden von Schnittstelle (15) und Anschlusselement (17) die Modulsteuerung (23) und die Steuerungseinrichtung (9) des Elektrofahrzeugs (2) über die Schnittstelle (15) und das Anschlusselement (17) drahtlos und bidirektional miteinander kommunizieren, das Modul (16) ein Lademodul ist,
die elektrische Anordnung des Moduls (16) eine Spannungsversorgung aufweist, welche mindestens zwei unterschiedliche Gleichspannungen zum Aufladen der Fahrzeugbatterie (7) bereitstellt, die mindestens eine erste und eine zweite Spannungsebene bilden, das Anschlusselement (17) ein erstes Kontaktelement zur Verbindung des Leistungsbordnetzes (3) mit der elektrischen Anordnung auf der ersten Spannungsebene aufweist, und wobei das Anschlusselement (17) mindestens ein zweites Kontaktelement zur Verbindung des Leistungsbordnetzes (3) mit der elektrischen Anordnung auf der zweiten Spannungsebene aufweist.

## Claims

1. A modular vehicle system having an electric vehicle (2) and a module (16) that can be connected to the electric vehicle (2) by means of a plug connection, wherein the electric vehicle (2) has at least:
- an on-board electrical system (3) for supplying energy to an electric drive unit (6) of the electric vehicle (2),
- a vehicle battery (7),
- a control apparatus (9) for communicating with the module (16), and
- an interface (15) connected to the on-board electrical system (3) and the control apparatus (9) for connecting to the module (16), which interface (15) forms a first element of the plug connection,
wherein the module (16) has at least:
- an electrical arrangement
- a module control (23) for communicating with the control apparatus (9) of the electric vehicle (2), and
- a connecting element (17) connected to the electrical arrangement and the module control (23) that forms a second element of the plug connection, wherein
- the interface (15) of the electric vehicle (2) can be separably connected to the connecting element (17) of the module (16) in order to connect the electrical arrangement of the module (16) to the on-board electrical system (3) of the electric vehicle (2),
- the interface (15) has a first NFC apparatus (43) and the connecting element (17) has a second NFC apparatus (104) that are designed for bidirectional short-range communication with each other in order to connect the control apparatus (9) of the electric vehicle (2) to the module control (23),
- the module (16) is a charging module,
- the electrical arrangement of the module (16) has a voltage supply that provides at least two different DC voltages for charging the vehicle battery (7) that form at least one first and one second voltage level,
- the connecting element (17) has a first contact element for connecting the on-board electrical system (3) to the electrical arrangement on the first voltage level, and wherein
- the connecting element (17) has at least one second contact element for connecting the on-board electrical system (3) to the electrical arrangement on the second voltage level.

2. The modular vehicle system according to claim 1, wherein the NFC apparatuses (43, 104) are designed, in addition to transmitting energy, in particular for supplying electrical energy to the control apparatus (9) of the electric vehicle (2) and/or the module control (23).

3. The modular vehicle system according to claim 2, wherein the electric vehicle (2) further has an auxiliary on-board electrical system (5), the module (16) has an auxiliary module electrical system, and the NFC apparatuses (43, 104) are designed for transmitting energy between the auxiliary on-board electrical system (5) and the auxiliary module electrical system.

4. The modular vehicle system according to one of the preceding claims, wherein the first NFC apparatus (43) and the second NFC apparatus (104) each have an NFC coil (45), the coil axis of which are arranged orthogonally to the plug direction and, when the connection between the interface (15) and the connecting element (17) is made as directed, parallel to each other.

5. The modular vehicle system according to claim 4, wherein the first NFC apparatus (43) and the second NFC apparatus (104) are designed such that their coil axes, when the connection of the plug connection is made as directed, substantially fully overlap.

6. The modular vehicle system according to one of the preceding claims, wherein a first locking means (35) is arranged on the interface (15) and a second locking means (105) that is designed to engage with the first locking means (35) is arranged on the connecting element (17).

7. The modular vehicle system according to claim 6, wherein an electrically actuatable locking drive, which is configured to move at least one of the locking means (35, 105) between a free position and a locking position, is arranged on the first and/or second locking means (35, 105).

8. The modular vehicle system according to claim 6 or 7, wherein the module control (23) is designed to send an identification signal to the control apparatus (9) when the connecting element (17) is connected to the interface (15) and the control apparatus (9) is designed to receive the identification signal, compare it to at least one compatibility parameter and, if the identification signal matches the compatibility parameter, send an activation signal to at least one switch unit (20, 21) in order to connect the electrical arrangement to the on-board electrical system (3) and send an activation signal to the at least one locking drive in order to lock the connecting element (17) with the interface (15).

9. The modular vehicle system according to one of the preceding claims, wherein the interface (15) and the connecting element (17) are designed to galvanically connect the electrical arrangement of the module (16) to the on-board electrical system (3) of the electric vehicle (2) on multiple voltage levels.

10. The modular vehicle system according to one of the preceding claims, wherein the first NFC apparatus (43) and/or the second NFC apparatus (104) has an NFC control that is designed to communicate with the control apparatus (9) or respectively the module control (23).

11. The modular vehicle system according to claim 10, wherein the NFC control can be logically addressed.

12. The modular vehicle system according to one of the preceding claims, wherein a flexible connecting means (34) is arranged between the interface (15) and the electric vehicle (2) and/or between the connecting element (17) and the module (16).

13. An electric vehicle (2) that can be connected to a module (16), wherein the electric vehicle (2) has at least:
- an on-board electrical system (3) for supplying energy to an electric drive unit (6) of the electric vehicle (2),
- a vehicle battery (7),
- a control apparatus (9) for communicating with the connectable module (16), and
- an interface (15) connected to the on-board electrical system (3) for separably connecting to the connectable module (16), wherein
- the interface (15) has an NFC apparatus (43) that is designed for bidirectional short-range communication with another NFC apparatus (104) of the connectable module (16),
- the connectable module (16) is a charging module and has an electrical arrangement with a voltage supply that provides at least two different DC voltages for charging the vehicle battery (7) that form at least one first and one second voltage level,
- the interface (15) has a first contact element for connecting the on-board electrical system (3) to the electrical arrangement on the first voltage level, and wherein
- the interface (15) has at least one second contact element for connecting the on-board electrical system (3) to the electrical arrangement on the second voltage level.

14. A module (16) for connecting to an electric vehicle (2) with an on-board electrical system (3), wherein the module (16) has:
- an electrical arrangement,
- a module control (23) for communicating with a control apparatus (9) of the connectable electric vehicle (2), and
- a connecting element (17) connected to the electrical arrangement for separably connecting to an interface (15) of the connectable electric vehicle (2), wherein
- the connecting element (17) has an NFC apparatus (104) that is designed for bidirectional short-range communication with another NFC apparatus (43) of the connectable electric vehicle (2),
- the module (16) is a charging module,
- the electrical arrangement of the module (16) has a voltage supply that provides at least two different DC voltages for charging a vehicle battery (7) of the connectable electric vehicle (2) that form at least one first and one second voltage level,
- the connecting element (17) has a first contact element for connecting the on-board electrical system (3) to the electrical arrangement on the first voltage level, wherein
- the connecting element (17) has at least one second contact element for connecting the on-board electrical system (3) to the electrical arrangement on the second voltage level.

15. A method for connecting an electric vehicle (2) to a module (16), wherein the electric vehicle (2) has an on-board electrical system (3) for supplying energy to an electric drive unit (6) of the electric vehicle (2), a vehicle battery (7), an interface (15) connected to the on-board electrical system (3) for connecting to a module (16), and a control apparatus (9) for communicating with the module (16) and wherein the module (16) has an electrical arrangement for connecting to the on-board electrical system (3) of the electric vehicle (2), a connecting element (17) that can be separably connected to the interface (15) of the electric vehicle (2), and a module control (23) for communicating with the control apparatus (9) of the electric vehicle (2), wherein the interface (15) and the connecting element (17) are designed for wireless short-range communication with each other so that, after the interface (15) and connecting element (17) are connected, the module control (23) and the control apparatus (9) of the electric vehicle (2) communicate with each other wirelessly and bidirectionally via the interface (15) and the connecting element (17), the module (16) is a charging module, the electrical arrangement of the module (16) has a voltage supply that provides at least two different DC voltages for charging the vehicle battery (7) that form at least one first and one second voltage level, the connecting element (17) has a first contact element for connecting the on-board electrical system (3) to the electrical arrangement on the first voltage level, and wherein the connecting element (17) has at least one second contact element for connecting the on-board electrical system (3) to the electrical arrangement on the second voltage level.

## Revendications

1. Système modulaire de véhicule doté d'un véhicule électrique (2) et d'un module (16) raccordable au véhicule électrique (2) au moyen d'un connecteur,
dans lequel le véhicule électrique (2) présente au moins :
• un réseau de bord de puissance (3) servant à alimenter en énergie une unité d'entraînement électrique (6) du véhicule électrique (2),
• une batterie de véhicule (7),
• un dispositif de commande (9) servant à communiquer avec le module (16) et
• une interface (15) reliée avec le réseau de bord de puissance (3) et avec le dispositif de commande (9) servant au raccordement avec le module (16), ladite interface (15) formant un premier élément du connecteur,
dans lequel le module (16) présente au moins :
• un agencement électrique,
• une commande de module (23) servant à communiquer avec le dispositif de commande (9) du véhicule électrique (2) et
• un élément de raccordement (17) relié avec l'agencement électrique et la commande de module (23), qui forme un second élément du connecteur, dans lequel
- l'interface (15) du véhicule électrique (2) est raccordable à l'élément de raccordement (17) du module (16) de manière séparable pour relier l'agencement électrique du module (16) avec le réseau de bord de puissance (3) du véhicule électrique (2),
- l'interface (15) présente un premier dispositif CCP (43) et l'élément de raccordement (17) un second dispositif CCP (104), lesquels sont conçus de manière à assurer la communication bidirectionnelle en champ proche pour relier le dispositif de commande (9) du véhicule électrique (2) avec la commande de module (23),
- le module (16) est un module de charge,
- l'agencement électrique du module (16) présente une alimentation en courant, laquelle fournit au moins deux tensions continues différentes pour charger la batterie de véhicule (7), qui forment au moins un premier et un second niveau de tension,
- l'élément de raccordement (17) présente un premier élément de contact servant à relier le réseau de bord de puissance (3) avec l'agencement électrique au premier niveau de tension, et dans lequel
- l'élément de raccordement (17) présente au moins un second élément de contact servant à relier le réseau de bord de puissance (3) avec l'agencement électrique au second niveau de tension.

2. Système modulaire de véhicule selon la revendication 1, dans lequel les dispositifs CCP (43, 104) sont conçus en plus de manière à transmettre l'énergie, notamment à alimenter le dispositif de commande (9) du véhicule électrique (2) et/ou la commande de module (23) en énergie électrique.

3. Système modulaire de véhicule selon la revendication 2, dans lequel le véhicule électrique (2) présente de plus un réseau de bord auxiliaire (5), le module (16) présente un réseau de module auxiliaire et les dispositifs CCP (43, 104) sont conçus de manière à transmettre l'énergie entre le réseau de bord auxiliaire (5) et le réseau de module auxiliaire.

4. Système modulaire de véhicule selon l'une des revendications précédentes, dans lequel le premier dispositif CCP (43) et le second dispositif CCP (104) présentent respectivement une bobine CCP, les axes des bobines respectives étant orthogonaux à la direction d'enfichage et disposés parallèlement l'un à l'autre dans le cas de la connexion conforme aux dispositions de l'interface (15) et de l'élément de raccordement (17).

5. Système modulaire de véhicule selon la revendication 4, dans lequel le premier dispositif CCP (43) et le second dispositif CCP (104) sont conçus de manière à ce que les axes de leur bobine se recouvrent complètement pour l'essentiel dans le cas du raccordement conforme aux dispositions du connecteur.

6. Système modulaire de véhicule selon l'une des revendications précédentes, dans lequel un premier moyen de verrouillage (35) est disposé sur l'interface (15) et un second moyen de verrouillage (105) sur l'élément de raccordement (17), qui est conçu de manière à intervenir avec le premier moyen de verrouillage (35).

7. Système modulaire de véhicule selon la revendication 6, dans lequel un actionneur de verrouillage à commande électrique est disposé sur le premier et/ou second moyen de verrouillage (35, 105), qui est conçu de manière à déplacer au moins l'un des moyens de verrouillage (35, 105) entre une position libérée et une position verrouillée.

8. Système modulaire de véhicule selon la revendication 6 ou 7, dans lequel la commande de module (23) est conçue de manière à envoyer un signal d'identification au dispositif de commande (9) en cas de connexion de l'élément de raccordement (17) à l'interface (15) et le dispositif de commande (9) est conçu de manière à recevoir le signal d'identification, à le comparer avec au moins un paramètre de compatibilité et à envoyer un signal d'activation à une unité de commutation (20, 21) au moins en cas de concordance entre le signal d'identification et le paramètre de compatibilité, afin de relier l'agencement électrique avec le réseau de bord de puissance (3) et d'envoyer un signal d'activation à l'actionneur de verrouillage au moins pour verrouiller l'élément de raccordement (17) à l'interface (15).

9. Système modulaire de véhicule selon l'une des revendications précédentes, dans lequel l'interface (15) et l'élément de raccordement (17) sont conçus de manière à assurer le raccordement galvanique de l'agencement électrique du module (16) avec le réseau de bord de puissance (3) du véhicule électrique (2) à plusieurs niveaux de tension.

10. Système modulaire de véhicule selon l'une des revendications précédentes, dans lequel le premier dispositif CCP (43) et/ou le second dispositif CCP (104) présente une commande CCP, qui est conçue de manière à communiquer avec le dispositif de commande (9) ou encore la commande de module (23).

11. Système modulaire de véhicule selon la revendication 10, dans lequel la commande CCP est adressable logiquement.

12. Système modulaire de véhicule selon l'une des revendications précédentes, dans lequel un moyen de liaison souple (34) est disposé entre l'interface (15) et le véhicule électrique (2) et/ou entre l'élément de raccordement (17) et le module (16).

13. Véhicule électrique (2), qui est raccordable à un module (16), dans lequel le véhicule électrique (2) présente au moins :
• un réseau de bord de puissance (3) servant à alimenter en énergie une unité d'entraînement électrique (6) du véhicule électrique (2),
• une batterie de véhicule (7),
• un dispositif de commande (9) servant à communiquer avec le module (16) raccordable et
• une interface (15) reliée avec le réseau de bord de puissance (3) servant à la connexion séparable au module (16) raccordable, dans lequel
• l'interface (15) présente un dispositif CCP (43), qui est conçu pour assurer la communication bidirectionnelle en champ proche avec un autre dispositif CCP (104) du module (16) raccordable,
• le module (16) raccordable est un module de charge et présente un agencement électrique doté d'une alimentation en courant, laquelle fournit au moins deux tensions continues différentes pour charger la batterie de véhicule (7), qui forment au moins un premier et un second niveau de tension,
• l'interface (15) présente un premier élément de contact servant à relier le réseau de bord de puissance (3) avec l'agencement électrique au premier niveau de tension, et dans lequel
• l'interface (15) présente au moins un second élément de contact servant à relier le réseau de bord de puissance (3) avec l'agencement électrique au second niveau de tension.

14. Module (16) à raccorder à un véhicule électrique (2) doté d'un réseau de bord de puissance (3), dans lequel le module (16) présente :
• un agencement électrique,
• une commande de module (23) servant à communiquer avec un dispositif de commande (9) du véhicule électrique (2) raccordable et
• un élément de raccordement (17) relié avec l'agencement électrique servant à la connexion séparable à une interface (15) du véhicule électrique (2) raccordable, dans lequel
• l'élément de raccordement (17) présente un dispositif CCP (104), qui est conçu pour assurer la communication bidirectionnelle en champ proche avec un autre dispositif CCP (43) du véhicule électrique (2) raccordable,
• le module (16) est un module de charge,
• l'agencement électrique du module (16) présente une alimentation en courant, laquelle fournit au moins deux tensions continues différentes pour charger une batterie (7) du véhicule électrique (2) raccordable, qui forment au moins un premier et un second niveau de tension,
• l'élément de raccordement (17) présente un premier élément de contact servant à relier le réseau de bord de puissance (3) avec l'agencement électrique au premier niveau de tension, et dans lequel
• l'élément de raccordement (17) présente au moins un second élément de contact servant à relier le réseau de bord de puissance (3) avec l'agencement électrique au second niveau de tension.

15. Procédé de connexion d'un véhicule électrique (2) avec un module (16), dans lequel le véhicule électrique (2) présente un réseau de bord de puissance (3) servant à alimenter en énergie une unité d'entraînement électrique (6) du véhicule électrique (2), une batterie de véhicule (7), une interface (15) reliée avec le réseau de bord de puissance (3) servant au raccordement avec le module (16) et un dispositif de commande (9) servant à communiquer avec le module (16) et dans lequel le module (16) présente un agencement électrique à raccorder au réseau de bord de puissance (3) du véhicule électrique (2), un élément de raccordement (17) pouvant être relié de manière séparable avec l'interface (15) du véhicule électrique (2) et une commande de module (23) servant à communiquer avec le dispositif de commande (9) du véhicule électrique (2) dans lequel
l'interface (15) et l'élément de raccordement (17) sont conçus de manière à communiquer sans fil l'un avec l'autre en champ proche, si bien qu'après la connexion de l'interface (15) et de l'élément de raccordement (17),
la commande de module (23) et le dispositif de commande (9) du véhicule électrique (2) communiquent entre eux sans fil selon un flux bidirectionnel via l'interface (15) et l'élément de raccordement (17), le module (16) est un module de charge, l'agencement électrique du module (16) présente une alimentation en courant, laquelle fournit au moins deux tensions continues différentes pour charger la batterie de véhicule (7), qui forment au moins un premier et un second niveau de tension, l'élément de raccordement (17) présente un premier élément de contact servant à relier le réseau de bord de puissance (3) avec l'agencement électrique au premier niveau de tension, et dans lequel l'élément de raccordement (17) présente au moins un second élément de contact servant à relier le réseau de bord de puissance (3) avec l'agencement électrique au second niveau de tension.
